# EUROPEAN PATENT SPECIFICATION

(11) **EP 3 682 697 B1**
(45) Date of publication and mention of the grant of the patent: **01.11.2023**
(21) Application number: 18760231.3
(22) Date of filing: 14.08.2018
(51) Int. Cl.: H04W 76/14, H04W 72/542, H04W 16/14

(54) **SYSTEM AND METHOD FOR COMMUNICATION ON LICENSED COMMUNICATION SPECTRUM AND UNLICENSED COMMUNICATION SPECTRUM**
SYSTEM UND VERFAHREN ZUR KOMMUNIKATION ÜBER EIN LIZENZIERTES KOMMUNIKATIONSSPEKTRUM UND NICHT LIZENZIERTES KOMMUNIKATIONSSPEKTRUM
SYSTÈME ET PROCÉDÉ DE COMMUNICATION SUR UN SPECTRE DE COMMUNICATION SOUS LICENCE ET SPECTRE DE COMMUNICATION SANS LICENCE

(30) Priority: 14.09.2017 US 201715704754
(43) Date of publication of application: 22.07.2020
(73) Proprietor: Qualcomm Incorporated, San Diego, CA 92121-1714 (US)
(72) Inventor: LI, Chong, Weehawken, New Jersey 07086 (US); HAMPEL, Karl Georg, San Diego, California 92121-1714 (US); LI, Junyi, San Diego, California 92121-1714 (US)
(74) Representative: Dunlop, Hugh Christopher
(86) International application number: PCT/US2018/046614
(87) International publication number: WO 2019/055165

(56) References cited:
- EP-A1- 2 408 234
- US-A1- 2010 208 696
- US-A1- 2011 228 666
- US-A1- 2014 308 954
- CAO XIANGHUI ET AL: "On Optimal Device-to-Device Resource Allocation for Minimizing End-to-End Delay in VANETs", IEEE TRANSACTIONS ON VEHICULAR TECHNOLOGY, IEEE SERVICE CENTER, PISCATAWAY, NJ, US, vol. 65, no. 10, 1 October 2016 (2016-10-01), pages 7905-7916, XP011625784, ISSN: 0018-9545, DOI: 10.1109/TVT.2016.2538791 [retrieved on 2016-10-13]

## Description

### TECHNICAL FIELD

The technology discussed below relates to wireless communication systems, and more particularly to wireless communication devices having access to licensed and unlicensed communication spectrum. Embodiments enable communication over licensed and unlicensed communication spectrum using different frequency bands, based on bandwidth availability, and enable communication over licensed communication spectrum when communication over unlicensed communication spectrum fails.

### INTRODUCTION

Industrial automation, also referred to as factory automation, involves the use of control systems for operating industrial equipment, such as assembly lines, robots, machines, and chemical processing systems. An industrial automation system may include computer-based controllers, electronic sensors of various types, and electronically controlled actuators of various types, such as motors and other devices. In an industrial automation system, such devices may be configured to communicate with one another via a wireless local-area technology, such as a Bluetooth or Wi-Fi (IEEE 802.11) network. As governmental authorities generally do not allocate wireless local-area communication frequency bands to specific entities, the frequency bands associated with such technologies are commonly referred to as "unlicensed" communication spectrum, also referred to as unlicensed frequency bands. In contrast, communication spectrum and frequency bands associated with wide-area wireless communication technologies are commonly referred to as "licensed" communication spectrum, or licensed frequency bands, because they are generally allocated to specific entities by governmental authorities.

Wide-area wireless communication systems are widely deployed to provide various telecommunication services, such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of a telecommunication standard is Long Term Evolution (LTE). LTE is a set of enhancements to the Universal Mobile Telecommunications System (UMTS) mobile standard promulgated by Third Generation Partnership Project (3GPP). LTE is designed to better support mobile broadband Internet access by improving spectral efficiency, lowering costs, improving services, making use of new spectrum, and better integrating with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies. An example of an improvement to LTE technology is referred to as 5G, or NR (new radio). The terms 5G and NR represent an evolution of LTE technology including, for example, various improvements to the wireless interface, processing improvements, and the enablement of higher bandwidth to provide additional features and connectivity.

The high bandwidth, high connectivity, scalability, and other benefits that 5G technology offers may lead to the use of 5G technology in various spheres of endeavor or "use cases" beyond mobile broadband communication. For example, 5G technology may be employed in so-called "mission-critical" control systems, such as industrial automation systems. The term "mission-critical" generally refers to the criticality of low latency and high reliability to achieving an objective. For this reason, mission-critical 5G services may also be referred to as ultra-reliable low-latency communications (URLLC) services. Industrial automation or other mission-critical devices that have access to LTE or 5G frequency bands may be referred to as URLLC user equipment (URLLC UE).

It is contemplated that an industrial automation device, such as a computer-based controller, sensor, etc., may have access to LTE frequency bands, 5G frequency bands, as well as unlicensed frequency bands that are commonly employed in industrial automation local-area communication, so that the industrial automation device may communicate on the licensed frequency band in the event communications on the unlicensed frequency band are disrupted by, for example, interference from other devices in the vicinity, channel bandwidth constraints, or other interference that may compromise the communication on the unlicensed frequency band.

Patent application US 2011/228666 relates to techniques for establishing and maintaining peer-to-peer (P2P) communication. P2P communication on an unlicensed spectrum may be established and maintained with network assistance. For example, a user equipment (UE) may communicate with a wide area network (WAN) to establish P2P communication with at least one other UE on a first frequency band that is not licensed to the WAN.

The publication "On Optimal Device-to-Device Resource Allocation for Minimizing End-to-End Delay in VANETs" by Xianghui Cao et al, IEEE Transactions of Vehicular Technology, Vol. 65, No. 10, October 2016, pages 7905 to 7916 relates to device-to-device (D2D) technology to improve the delay performance of vehicular ad hoc networks (VANETs). Direct D2D-based communications among vehicles remove the contention delay and can support longer distance. Specifically, a hybrid system with both D2D- and IEEE 802, 1 1p-based communications is designed where the D2D links are controlled by the cellular base stations (BSs) in the overlay scheme. Each vehicle periodically checks its packet lifetime and request the BSs to establish D2D links, if needed.

The Patent Application US 2010/0208696 A1 relates to a fast uplink data transmission method for an improved handover. This method effectively uses a handover signal when there is data to be transmitted to an uplink during an Intra Radio Access Technology handover, such that it quickly transmits and receives uplink data.

Document EP2408234 A1 (NOKIA CORP [FI]) 18 January 2012 illustrates direct wireless communication using both licensed and unlicensed bands.

Document US 2014/308954 A1 (WANG HAIFENG [CN] ET AL) 16 October 2014 illustrates D2D communication switch from a shared band to a cellular band.

### BRIEF SUMMARY

Aspects of the present invention are set out in the appended claims.

### BRIEF DESCRIPTION OF THE DRAWINGS

In the figures, like reference numerals refer to like parts throughout the various views unless otherwise indicated. For reference numerals with letter character designations such as "102a" or "102b", the letter character designations may differentiate two like parts or elements present in the same figure. Letter character designations for reference numerals may be omitted when it is intended that a reference numeral encompass all parts having the same reference numeral in all figures.
FIG. 1 is a network diagram illustrating an example of a network architecture, in accordance with various aspects of the present disclosure.
FIG. 2 is a diagram illustrating an example of a DL frame structure in LTE.
FIG. 3 is a diagram illustrating an example of an UL frame structure in LTE.
FIG. 4 is a diagram illustrating an example of a radio protocol architecture for the user and control planes in LTE in accordance with various aspects of the present disclosure.
FIG. 5 illustrates an example of a communications system, in accordance with the network architecture of FIG. 1, experiencing a communication link failure between two devices on a first frequency band and communication between the two devices being restored over a second frequency band.
FIG. 6 is a block diagram of an exemplary device, in accordance with various aspects of the present disclosure.
FIG. 7 is a block diagram of an exemplary device, which may be an example of a base station, in accordance with various aspects of the present disclosure.
FIG. 8 is a call flow diagram illustrating a first exemplary embodiment in accordance with various aspects of the present disclosure.
FIG. 9 is a call flow diagram illustrating a second exemplary embodiment in accordance with various aspects of the present disclosure.
FIG. 10 is a flow chart illustrating an example of a method for communication, in accordance with various aspects of the present disclosure.
FIG. 11 is a flow chart illustrating an example of a method for communication, in accordance with various aspects of the present disclosure.
FIG. 12 is a flow chart illustrating an example of a method for communication, in accordance with various aspects of the present disclosure.
FIG. 13 is a flow chart illustrating an example of a method for communication, in accordance with various aspects of the present disclosure.
FIG. 14 is a functional block diagram of an apparatus for a communication system in accordance with various aspects of the present disclosure.
FIG. 15 is a functional block diagram of an apparatus for a communication system in accordance with various aspects of the present disclosure.
FIG. 16 is a functional block diagram of an apparatus a communication system in accordance with various aspects of the present disclosure.
FIG. 17 is a functional block diagram of an apparatus for a communication system in accordance with various aspects of the present disclosure.

### DETAILED DESCRIPTION

The word "exemplary" is used herein to mean "serving as an example, instance, or illustration." Any aspect described herein as "exemplary" is not necessarily to be construed as preferred or advantageous over other aspects.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a non-transitory computer-readable medium. Non-transitory computer-readable media include computer-readable storage media. Computer-readable storage media may be any available media that can be accessed by a computer. By way of example, and not limitation, such computer-readable storage media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

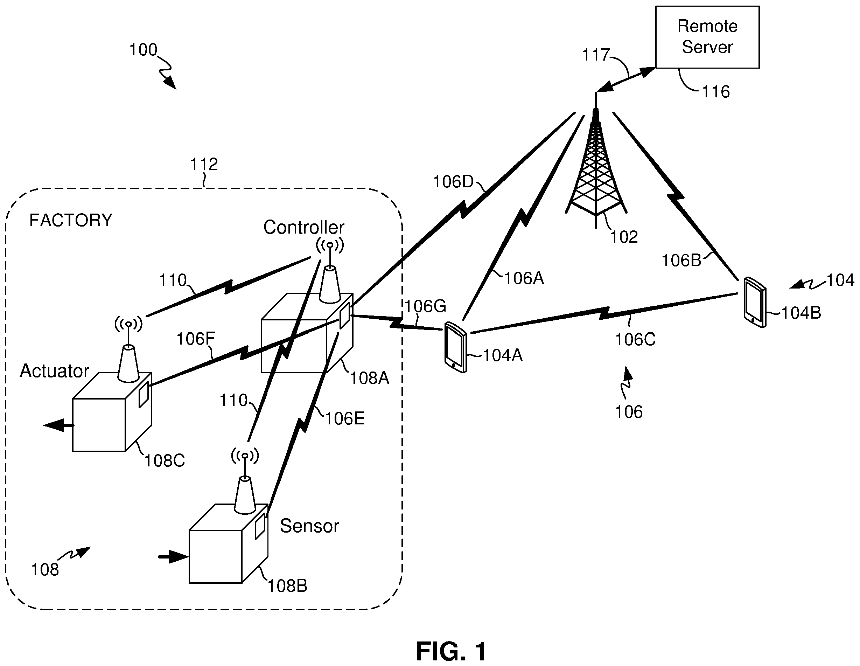

FIG. 1 illustrates an example of a wireless communications system 100 in accordance with various aspects of the disclosure. Wireless communications system 100 includes one or more base stations 102 and one or more user equipments (UEs) 104 (e.g., UE 104A, 104B, etc.) that are configured to communicate with each other via any of various communication links 106 (e.g., communication link 106A, 106B, 106C, etc.). Although for purposes of clarity only a single exemplary base station 102 is shown in FIG. 1, such a wireless communications system 100 may include any number of base stations 102. In an exemplary embodiment, the base station 102 may be in communication with a remote server 116 over a connection 117. The connection 117 may be a wired or a wireless connection, and, in an exemplary embodiment, may comprise a backhaul connection (such as an X2 connection), may comprise an IP network, a connection to an IP network, or may comprise a core network (not shown) that provides user authentication, access authorization, tracking, Internet Protocol (IP) connectivity, and other access, routing, or mobility functions. The remote server 116 may be a stand-alone device, or may be part of a core network or an evolved packet core (EPC) that may provide one or more services or functions, such as those described herein.

Wireless communications system 100 may include, for example, an LTE/LTE-A network, a 5G network, or a heterogeneous network comprising aspects of both LTE and 5G technologies or other technologies. In LTE/LTE-A networks, the term evolved Node B (eNB), or in a 5G network, the term millimeter wave B (mWB) or gigabit Node B (gNB), may be used generally to describe base stations 102, while the term UE, mobile broadband UE, or evolved mobile broadband (eMBB) UE may be used generally to describe UEs 104. Wireless communications system 100 may be a heterogeneous LTE/LTE-A and 5G network in which different types of eNBs and/or gNB provide coverage for various geographical regions. For example, each base station 102 may provide communication coverage for a macro cell, a small cell, and/or other types of cell. The term "cell" is a 3GPP term that can be used to describe a base station, a carrier or component carrier associated with a base station, or a coverage area (e.g., sector, etc.) of a carrier or base station, depending on context. In some examples, wireless communications system 100 may be, or may include, a millimeter wave communication network.

The term "NR" may be used herein to refer to "new radio," which is a way of referring to a radio interface that may be part of the 5G communication methodology. The term "NR" may be used interchangeably with the term "5G" in this disclosure.

Each base station 102 (e.g., a gNB) may provide communication coverage for a respective geographic coverage area. A macro cell generally covers a relatively large geographic area (e.g., several kilometers in radius) and may allow unrestricted access by UEs with service subscriptions with the network provider. A small cell is a lower-powered base station, as compared with a macro cell, that may operate in the same or different (e.g., licensed, unlicensed, etc.) frequency bands as macro cells. Small cells may include pico cells, femto cells, and micro cells according to various examples. A pico cell may cover a relatively smaller geographic area and may allow unrestricted access by UEs with service subscriptions with the network provider. A femto cell also may cover a relatively small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB or a home eNB.

Although not shown for purposes of clarity, wireless communications system 100 may include base stations 102 of different types (e.g., macro and/or small cell base stations). There may be overlapping geographic coverage areas for different technologies.

Wireless communications system 100 may support synchronous or asynchronous operation. For synchronous operation, base stations 102 may have similar frame timing, and transmissions from different base stations may be approximately aligned in time. For asynchronous operation, base stations 102 may have different frame timing, and transmissions from different base stations may not be aligned in time.

The communication networks that may accommodate some of the various disclosed examples may be packet-based networks that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use Hybrid ARQ (HARQ) to provide retransmission at the MAC layer to improve link efficiency. In the control plane, the Radio Resource Control (RRC) protocol layer may provide establishment, configuration, and maintenance of an RRC connection between a UE 104 and the base stations 102 supporting radio bearers for the user plane data. At the Physical (PHY) layer, the transport channels may be mapped to Physical channels.

The UEs 104 may be dispersed throughout the wireless communications system 100, and each UE 104 may be stationary or mobile. A UE 104 may also include or be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 104 may be a cellular phone, a personal digital assistant (PDA), a wireless modem, a wireless communication device, a handheld device, a tablet computer, a computer, a cordless phone, a wireless local loop (WLL) station, or the like. A UE 104 may be able to communicate with various types of base stations and network equipment including macro eNBs, small cell eNBs, mWBs/gNBs, relay base stations, and the like. Two UEs 104 also may be able to communicate directly with each other (i.e., not via any intermediary device such as one of base stations 102) in a manner commonly referred to as device-to-device (D2D) communication, as indicated by communication link 106C. UEs 104 in D2D communication with each other may be located either within or outside the coverage area of one of base stations 102.

Communication links 106 may carry or represent uplink (UL) transmissions from a UE 104 to a base station 102, and/or downlink (DL) transmissions from a base station 102 to a UE 104. The downlink transmissions may also be called forward link transmissions while the uplink transmissions may also be called reverse link transmissions. Each communication link 106 may include one or more carriers, where each carrier may be a signal made up of multiple sub-carriers (e.g., waveform signals of different frequencies) modulated according to the various radio technologies described above. Each modulated signal may be sent on a different sub-carrier and may carry control information (e.g., reference signals, control channels, etc.), overhead information, user data, etc. The communication links 106 may transmit bidirectional communications using FDD (e.g., using paired spectrum resources) or TDD operation (e.g., using unpaired spectrum resources). Frame structures for FDD (e.g., frame structure type 1) and TDD (e.g., frame structure type 2) may be defined.

In some examples, base stations 102 and/or UEs 104 may include multiple antennas for employing antenna diversity schemes to improve communication quality and reliability between base stations 102 and UEs 104. Additionally or alternatively, base stations 102 and/or UEs 104 may employ multiple-input, multiple-output (MIMO) techniques that may take advantage of multi-path environments to transmit multiple spatial layers carrying the same or different coded data. UEs 104 may relate primarily to mobile broadband service (e.g., eMMB), in which users (not shown) may use UEs 104 to communicate with each other or with others, and to access the Internet or other remote broadband resources.

Wireless communications system 100 may further include one or more devices 108 (e.g., devices 108A, 108B, 108C, etc.) that relate to a different service, such as ultra-reliable low-latency communication (URLLC), or another type or form of communication used in, for example, factory automation, where, for example, devices 108 may communicate directly with each other in a device-to-device methodology over unlicensed communication spectrum using unlicensed frequency bands. The devices 108 may include, for example, sensors, controllers, actuators, or other devices or types of devices used in factory automation and in general, machine-to-machine (M2M) communication, machine type communication (MTC), or other communication types. In an exemplary embodiment, the devices 108 have the ability to communicate directly with each other using unlicensed communication spectrum on unlicensed frequency bands, licensed communication spectrum on licensed frequency bands, or a combination of unlicensed communication spectrum and licensed communication spectrum. In the exemplary embodiments described in this disclosure, devices 108 may be URLLC UE devices. For example, device 108A may be an industrial automation (also referred to as factory automation) controller, device 108B may comprise an industrial automation sensor, and device 108C may comprise an industrial automation actuator (e.g., motor, relay, driver, etc.). Although for purposes of clarity only the three exemplary devices 108A-108C are shown in FIG. 1, such a wireless communications system 100 may include any number of devices 108. In an exemplary embodiment, the devices 108 may include, contain, or otherwise have access to communication technology that allow communication over a short-range wireless interface using unlicensed communication spectrum over unlicensed frequency bands, such as, for example, WiFi, Bluetooth, or other short-range wireless communication technology. The devices 108 may also include, contain, or otherwise have access to communication technology that allow communication over a WAN-based wireless interface using licensed communication spectrum over licensed frequency bands, such as, for example, LTE, 5G, or other WAN-based wired or wireless communication technology.

In an exemplary embodiment, device 108A may be configured to communicate with devices 108B and 108C via communication links 110. Communication links 110 may relate to communications that may occur on one or more unlicensed frequency bands. In the exemplary embodiments described in this disclosure, in contrast with the frequency bands (e.g., LTE, 5G) on which base station 102 and UEs 104 communicate in the manner described above, some of the frequency bands on which devices 108 communicate are not allocated or "licensed" to specific entities by governmental or other authorities. For example, communication links 110 may relate to communication on Bluetooth, Wi-Fi (IEEE 802.11), or similar unlicensed frequency bands. Communications on unlicensed frequency bands may be limited to shorter ranges than macro-cell communications on licensed frequency bands. For example, devices 108 may be located within a factory 112 or other local environment and may lack the range (e.g., transmitter power) to communicate with devices located substantially outside the factory on the unlicensed frequency band.

Devices 108 may have access to not only the one or more unlicensed frequency bands described above but also one or more licensed frequency bands. Communication links 106E and 106F relate to communication that may occur between devices 108 on one or more licensed frequency bands, which may include the same bands on which UEs 104 are configured to communicate in the manner described above. As described in further detail below, devices 108 may switch to communication on a licensed frequency band after communication between them on an unlicensed frequency band has failed, or is experiencing interference that impedes reliable communication. Another communication link 106D shown in FIG. 1 relates to communication that may occur on the licensed frequency band between base station 102 and one of devices 108 and may function as described below. Still another communication link 106G shown in FIG. 1 relates to communication that may occur on the licensed frequency band between one of devices 108 and one of UEs 104 and may function as described below.

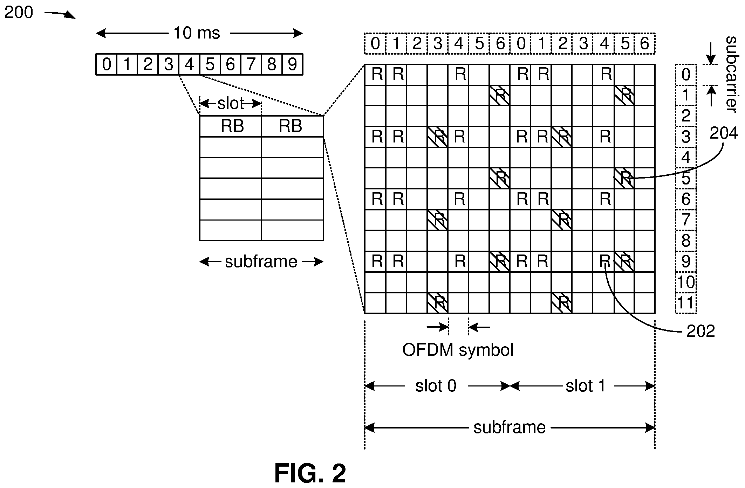

FIG. 2 is a diagram 200 illustrating an example of a DL frame structure in LTE. A frame (10 ms) may be divided into 10 equally sized subframes. Each subframe may include two consecutive time slots. A resource grid may be used to represent two time slots, each time slot including a resource block. The resource grid is divided into multiple resource elements. In LTE, for a normal cyclic prefix, a resource block contains 12 consecutive subcarriers in the frequency domain and 7 consecutive OFDM symbols in the time domain, for a total of 84 resource elements. For an extended cyclic prefix, a resource block contains 12 consecutive subcarriers in the frequency domain and 6 consecutive OFDM symbols in the time domain, for a total of 72 resource elements. In other exemplary communication systems, such as, for example, a 5G or a NR communication system, other numbers of subcarriers in the frequency domain and symbols in the time domain, providing other numbers of resource elements are possible. Some of the resource elements, indicated as R 202, 204, include DL reference signals (DL-RS). The DL-RS include Cell-specific RS (CRS) (also sometimes called common RS) 202 and UE-specific RS (UE-RS) 204. UE-RS 204 are transmitted on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

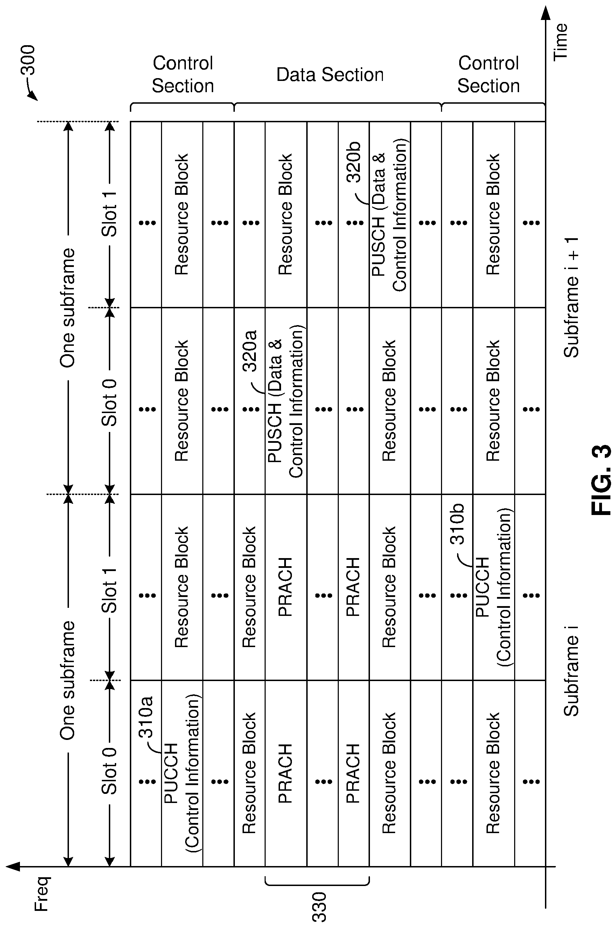

FIG. 3 is a diagram 300 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 310a, 310b in the control section to transmit control information to an eNB/gNB. The UE may also be assigned resource blocks 320a, 320b in the data section to transmit data to the eNB/gNB. The UE may transmit uplink control information (UCI) in a physical UL control channel (PUCCH) on the assigned resource blocks in the control section. The UE may transmit data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 330. The PRACH 330 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make a single PRACH attempt per frame (10 ms).

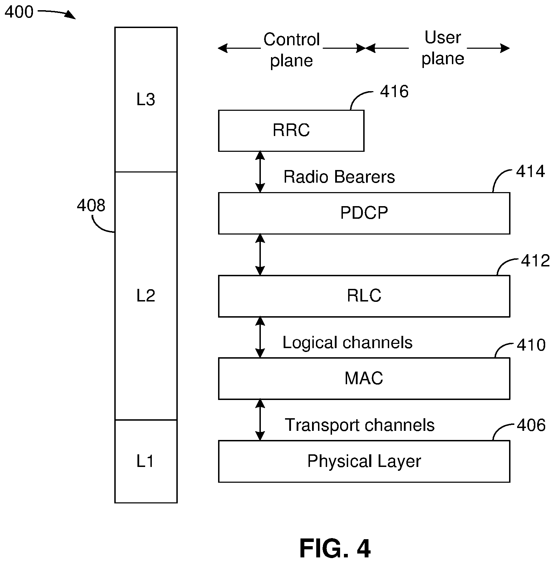

FIG. 4 is a diagram 400 illustrating an example of a radio protocol architecture for the user and control planes in LTE in accordance with various aspects of the present disclosure. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 406. Layer 2 (L2 layer) 408 is above the physical layer 406 and is responsible for the link between the UE and eNB over the physical layer 506.

In the user plane, the L2 layer 408 includes a media access control (MAC) sublayer 410, a radio link control (RLC) sublayer 412, and a packet data convergence protocol (PDCP) 414 sublayer, which are terminated at the eNB on the network side. Although not shown, the UE may have several upper layers above the L2 layer 408 including a network layer (e.g., IP layer) that may be terminated at a PDN gateway (not shown) on the network side, and an application layer that may be terminated at the other end of the connection (e.g., far end UE, server, etc.).

The PDCP sublayer 414 provides multiplexing between different radio bearers and logical channels. The PDCP sublayer 414 also provides header compression for upper layer data packets to reduce radio transmission overhead, security by ciphering the data packets, and handover support for UEs between eNBs. The RLC sublayer 412 provides segmentation and reassembly of upper layer data packets, retransmission of lost data packets, and reordering of data packets to compensate for out-of-order reception due to hybrid automatic repeat request (HARQ). The MAC sublayer 410 provides multiplexing between logical and transport channels. The MAC sublayer 410 is also responsible for allocating the various radio resources (e.g., resource blocks) in one cell among the UEs. The MAC sublayer 410 is also responsible for HARQ operations.

In the control plane, the radio protocol architecture for the UE and eNB is substantially the same for the physical layer 406 and the L2 layer 408 with the exception that there is no header compression function for the control plane. The control plane also includes a radio resource control (RRC) sublayer 416 in Layer 3 (L3 layer). The RRC sublayer 416 is responsible for obtaining radio resources (e.g., radio bearers) and for configuring the lower layers using RRC signaling between the eNB and the UE.

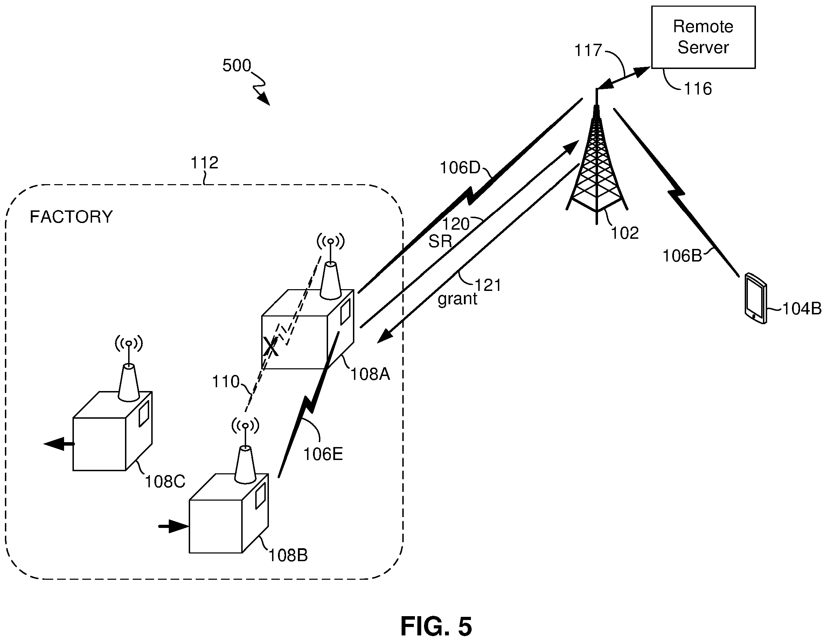

FIG. 5 illustrates an example of a communications system 500, in accordance with the network architecture of FIG. 1, experiencing a communication link failure between two devices on a first frequency band and communication between the two devices being restored over a second frequency band. In an exemplary embodiment, there may be interference, or another condition, that may interfere with communication between device 108A and device 108B on the unlicensed frequency band to an extent that the communication on the unlicensed frequency band fails, as indicated by an "X" on the broken-line depiction of communication link 110. The term "fail" or "failure" as used in this disclosure in the context of a communication on the unlicensed frequency band means either that the communication is unable to be established or that the communication is disrupted after being established. In an exemplary embodiment, the device 108A may be a controller and the device 108B may be a sensor; however, any of the devices 108 may be in similar communication as the devices 108A and 108B, and the devices 108 may be any communication devices described herein capable of communication over a first frequency band and a second frequency band. Further, in an exemplary embodiment described herein, when the devices 108A and 108B communicate with each other, the device 108A may be considered to be a "transmitter" and the device 108b may be considered to be a "receiver." However, all of the devices 108 may be considered transceivers, capable of both transmitting and receiving. In an exemplary embodiment, the device 108A may detect failure of a communication between it and device 108B on the unlicensed frequency band. In the example illustrated in FIG. 5, no communication link relating to device 108C is shown, indicating that device 108C may not be communicating or that its communication may not be suffering from interference. In an exemplary embodiment, if the communication on the unlicensed frequency band 110 fails, the device 108A (e.g., a controller) may be configured to communicate with the device 108B (e.g., a sensor) on a licensed frequency band (such as LTE or 5G), whereby the device 108A (e.g., a controller) may appear as a user equipment (UE) to the base station 102, and may appear as a base station to the device 108B (e.g., a sensor).

In an exemplary embodiment, if channel access or data transmission between the device 108A and the device 108B using an unlicensed frequency band, such as communication link 110, fails beyond a threshold (e.g. a pre-assigned period of time, a communication quality level, or another threshold, such as, for example only, a time period of 0.5ms over which communication does not occur), the device 108A may send a scheduling request (SR) 120 to the base station 102 over, for example, communication link 106D, requesting a grant from the base station 102 to allow the device 108A to communicate with the device 108B using, for example, a licensed frequency band, shown in FIG. 5 as exemplary communication link 106E.

In an exemplary embodiment, the scheduling request (SR) sent from the device 108B to the base station 102 may be a single bit sent on a dedicated physical uplink control channel (PUCCH) scheduling request resource over communication link 106D, occurring, for example, every n-th subframe. Alternatively, the scheduling request (SR) may be a sequence of bits on a contention-based resource where a terminal identifier (ID) may be embedded in the bit-sequence.

In an exemplary embodiment, the base station 102 may, over communication link 106D, assign a grant 121 to the device 108A to allow the device 108A to communicate with the device 108B on a licensed frequency band (for example, using LTE or 5G resources (e.g. the entire LTE band if needed) over communication link 106E) for a predetermined or predefined amount of resources, including, for example, an amount of frequency resources (e.g., n-subbands) and an amount of time resources (e.g., *m-*subframes), so that the device 108A may communicate with the device 108B over the communication link 106E using a licensed frequency band for the next m-subframes over an amount of frequency resources, or the base station 102 may, over communication link 106D, assign a grant 121 to the device 108A to allow the device 108A to communicate with the device 108B on a licensed frequency band without a predetermined or predefined amount of resources until an unlicensed frequency band becomes available.

In another exemplary embodiment, in response to the SR 120 sent from the device 108A to the base station 102, the base station 102 may respond to the device 108A with a limited grant for a small data packet, *P1,* which may include buffer status report (BSR) information, an amount of power available, etc. For example, in response to the SR 120 sent from the device 108A, the base station 102 may send back to the device 108A a grant 121 to schedule a small packet, *P1,* including information relating to a buffer status report (BSR), an amount of power available, etc. This information will allow the base station 102 to schedule the UL data transmission in the sequential subframes. The small data packet, *P1,* carrying BSR, power info, and possibly some other information may be tens of bits to hundreds of bits. The device 108A may send the small data packet, *P1,* to the remote server 116 (or an evolved packet core (EPC)) via the base station 102, and then the remote server 116 may respond by assigning a grant of resources on a licensed frequency band to the device 108A, via the base station 102, for the device-to-device data transmission between the devices 108A and 108B based on the information in the small data packet, *Pl.* Coordinating the communication over the licensed frequency band between the device 108A and the device 108B with the remote server 116 may provide enhanced security over the situation where the base station 102 provides the grant of resources on a licensed frequency band directly to the device 108A.

The communication between the device 108A and the device 108B may continue until, in this exemplary embodiment, the device 108A determines that the unlicensed frequency band is available for data transmission, after which the device 108A may send a release signal (which may be similar to the SR) over, for example, the PUCCH to the base station 102 requesting the release of the licensed frequency band. Alternatively, the communication between the device 108A and the device 108B may be granted for a predetermined or predefined amount of resources, including, for example, an amount of frequency resources (e.g., n-subbands) and an amount of time resources (e.g., *m-*subframes), after which the resources on the licensed frequency band will be automatically released, unless additional licensed frequency band resources are again requested by the device 108A.

The communication methodology described herein may apply to any unlicensed or unlicensed spectrum-based wireless technologies in factory automation. Using LTE as an example of a licensed communication spectrum, no physical/medium access control (PHY/MAC) changes to off-the-shelf LTE equipment is required to enable this communication methodology. LTE procedures, such as scheduling and power control, can be further optimized to satisfy the reliability and latency requirements of particular applications.

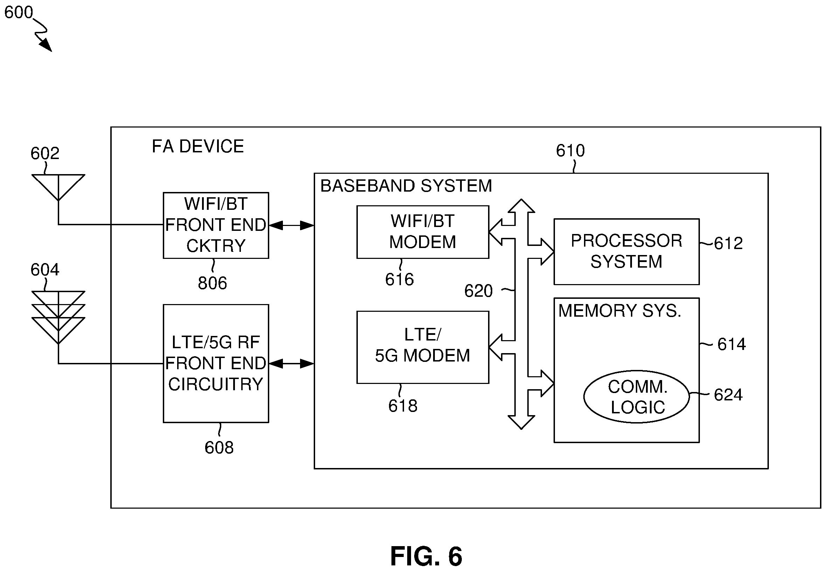

FIG. 6 is a block diagram of an exemplary device 600, which may be an example of device 108A, 108B, 108C, or any device 108. Although in the exemplary embodiments described in this disclosure, device 600 may be a factory automation controller, sensor, or actuator of the types described above, in other embodiments such a URLLC UE device may be of any other type having access to a second frequency band from a first frequency band in the manner described in this disclosure. The device 600 may include one or more first frequency band antennas 602 and one or more second frequency band antennas 604. For example, first frequency band antennas 602 may be WiFi antennas, Bluetooth antennas, or antennas for another unlicensed communication spectrum. The second frequency band antennas 604 may be LTE antennas, 5G antennas, or antennas for another licensed communication spectrum. The device 600 may further include WiFi/Bluetooth RF front end circuitry 606 coupled to antennas 602, and LTE/5G RF front end circuitry 608 coupled to antennas 604. The device 600 may also include baseband system 610. The baseband system 610 may include a processor system 612 and a memory system 614. The baseband system 610 may also include a WiFi/Bluetooth modem 616 and an LTE/5G modem 618. The processor system 612, memory system 614, WiFi/Bluetooth modem 616, and LTE/5G modem 618 may communicate, directly or indirectly, with each other (e.g., via one or more buses 620). A processing system comprising the processor system 612 and the memory system 614 may be configured to detect failure of a communication on the WiFi/Bluetooth or other first frequency band, and in response, initiate communication on a second frequency band, allowing devices 108 to communicate over an LTE, a 5G, or another licensed frequency band. The processing system comprising the processor system 612 and the memory system 614 may further be configured to resume the communication on the WiFi/Bluetooth or other first frequency band after the first frequency band becomes available, or after a predetermined time period or predetermined amount of resources on the second frequency band is expended.

A portion of the foregoing functionality may be performed under the control of processor system 612 through the execution of logic or instructions in the form of software, firmware, etc. In addition, some or all of the communication methods described in this disclosure may be performed under the control of processor system 612 through the execution of communication logic 624. In the example shown in FIG. 6, memory system 614 is configured with, among other things, communication logic 624. In this example, communication logic 624 may be in the form of software or firmware. More generally, memory system 614 or other memory (not shown) may be configured with software or firmware, which, when executed by processor system 612 or other processors (not shown), causes device 600 to control various methods, including the methods described in this disclosure. Although not shown for purposes of clarity, memory system 614 also may be configured with other software or firmware, which, when executed by processor system 612 or other processes, causes device 600 or its processing system to control methods relating to factory automation or other conventional methods, such as, for example, obtaining sensor readings from device 108B (FIG. 1), processing such sensor readings or other data, controlling device 108C (FIG. 1) in response to such processing, etc. Although for purposes of clarity communication logic 624 is shown in FIG. 6 in a conceptual manner as stored in or residing in memory system 614 in the manner of software or firmware, it should be understood that communication logic 624 may be made accessible to processor system 612 in any manner. Also, it should be noted that memory system 614 is an example of a computer program product comprising a non-transitory computer-readable medium having stored therein in non-transitory computer-executable form, instructions (e.g., communication logic 624) which, when executed by processor system 612, may effect the methods of operation described in this disclosure. Some or all of baseband system 610 and RF front end circuitry 606 and 608 may be implemented using one or more application-specific integrated circuits (ASICs) adapted to control some or all of the associated methods or functions described herein. Alternatively, the methods or functions may be controlled by one or more other processing units (or cores), on one or more integrated circuits. In other examples, other types of integrated circuits may be used (e.g., Structured/Platform ASICs, Field Programmable Gate Arrays (FPGAs), and other Semi-Custom ICs), which may be programmed in any manner known in the art.

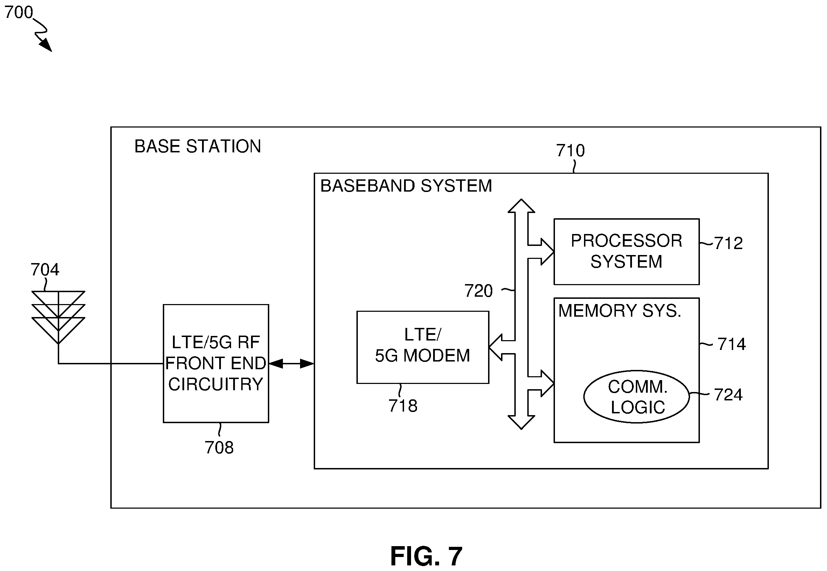

FIG. 7 is a block diagram of an exemplary device 700, which may be an example of the base station 102 of FIG. 1. The device 700 may include one or more antennas 704, configured for operation over licensed frequency bands. For example, antennas 704 may be LTE antennas, 5G antennas, or antennas for another licensed communication spectrum. The device 700 may further include LTE/5G RF front end circuitry 708 coupled to antennas 704. The device 700 may also include baseband system 710. The baseband system 710 may include a processor system 712 and a memory system 714. The baseband system 710 may also include an LTE/5G modem 718. The processor system 712, memory system 714, and LTE/5G modem 718 may communicate, directly or indirectly, with each other (e.g., via one or more buses 720). A processing system comprising the processor system 712 and the memory system 714 may be configured to respond to requests for access to licensed frequency bands from a device 108, allowing devices 108 to communicate over an LTE, a 5G, or another licensed frequency band. The processing system comprising the processor system 712 and the memory system 714 may further be configured to release the communication on the LTE, 5G or other second frequency band after receiving a release signal from a device 108, or after a predetermined time period or a predetermined amount of resources have been used on the second frequency band.

A portion of the foregoing functionality may be performed under the control of processor system 712 through the execution of logic or instructions in the form of software, firmware, etc. In addition, some or all of the communication methods described in this disclosure may be performed under the control of processor system 712 through the execution of communication logic 724. In the example shown in FIG. 7, memory system 714 is configured with, among other things, communication logic 724. In this example, communication logic 724 may be in the form of software or firmware. More generally, memory system 714 or other memory (not shown) may be configured with software or firmware, which, when executed by processor system 712 or other processors (not shown), causes device 700 to control portions of various methods, including portions of the methods described in this disclosure. Although not shown for purposes of clarity, memory system 714 also may be configured with other software or firmware, which, when executed by processor system 712 or other processes, causes device 700 or its processing system to control methods relating to communication with devices 108 and UEs 104. Although for purposes of clarity communication logic 724 is shown in FIG. 7 in a conceptual manner as stored in or residing in memory system 714 in the manner of software or firmware, it should be understood that communication logic 724 may be made accessible to processor system 712 in any manner. Also, it should be noted that memory system 714 is an example of a computer program product comprising a non-transitory computer-readable medium having stored therein in non-transitory computer-executable form, instructions (e.g., communication logic 724) which, when executed by processor system 712, may effect the methods of operation described in this disclosure. Some or all of baseband system 710 and RF front end circuitry 708 may be implemented using one or more application-specific integrated circuits (ASICs) adapted to control some or all of the associated methods or functions described herein. Alternatively, the methods or functions may be controlled by one or more other processing units (or cores), on one or more integrated circuits. In other examples, other types of integrated circuits may be used (e.g., Structured/Platform ASICs, Field Programmable Gate Arrays (FPGAs), and other Semi-Custom ICs), which may be programmed in any manner known in the art.

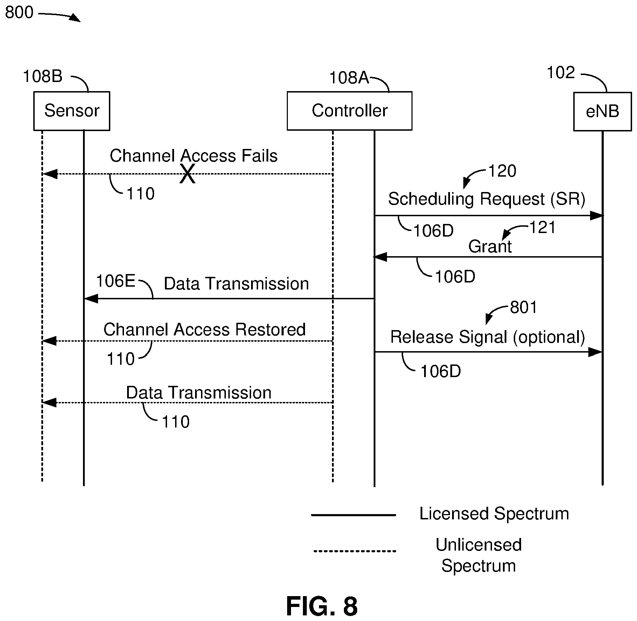

FIG. 8 is a call flow diagram 800 illustrating a first exemplary embodiment in accordance with various aspects of the present disclosure. Communication over unlicensed frequency bands is shown using dashed lines and communication over licensed frequency bands is shown using solid lines. In an exemplary embodiment, a device 108A detects a failure in communication with a device 108B over an unlicensed frequency band, shown using the "X" over communication link 110. Once the communication link failure is detected, the device 108A sends a scheduling request (SR) 120 to a base station 102 over a communication link 106D, requesting a grant 121 to allow the device 108A to communicate with the device 108B over a licensed frequency band. In an exemplary embodiment, the SR 120 may be a single bit sent on a dedicated physical uplink control channel (PUCCH) scheduling request resource over communication link 106D, occurring, for example, every n-th subframe, or the SR 120 may be a sequence on a contention-based resource where a terminal identifier (ID) may be embedded in the sequence. For example, a Zadoff-Chu (ZC) sequence may be chosen for the SR. Then, the cyclic shift of each ZC sequence is a one-to-one mapping to a terminal ID. Once the base station 102 detects the shifting phase of a ZC sequence, the base station 102 knows the terminal ID.

In an exemplary embodiment, the base station 102 may, over communication link 106D, respond to the SR 120 by assigning a grant 121 of resources to the device 108A to allow the device 108A to communicate with the device 108B on a licensed frequency band (for example, LTE or 5G resources (e.g. the entire LTE band if needed)) for the next predetermined amount of frequency and time resources or until an unlicensed frequency band becomes available, so that the device 108A may communicate with the device 108B over the communication link 106E using a licensed frequency band. This communication between the device 108A and 108B is depicted as "Data Transmission" over communication link 110, but may also comprise "Data Reception" from the device 108B to the device 108A. The base station 102 sending the resource grant 121 directly to the device 108A ensures low latency when the device 108A desires to switch to the licensed frequency band.

In an exemplary embodiment, if no scheduled data are received by the device 108B from the device 108A or if data decoding in the device 108B fails for a period above the threshold (e.g., the 0.5 ms threshold mentioned herein) on the unlicensed frequency band, the device 108B may then switch frequency bands automatically to monitor the licensed frequency band 106, in anticipation of receiving a communication from the device 108A over the licensed frequency band 106E.

While transmitting on the licensed frequency band 106, the device 108A may continue monitoring the unlicensed frequency band 110. If the unlicensed frequency band 110 becomes available, the device 108A may switch back to the unlicensed frequency band 110 and continue data transmission on the unlicensed frequency band 110, at which time the resource on the licensed frequency band 106 may be released.

In an exemplary embodiment, the device 108A may send a release signal 801 to the base station 102 using, for example, a SR-like release signal sent on the PUCCH of the communication link 106D requesting that the base station 102 release the resource on the licensed frequency band 106E.

In another exemplary embodiment, each grant of licensed frequency band resources from the base station 102 to the device 108A may only assign a limited amount of frequency and time resources, whereby the device 108A sends an additional scheduling request (SR) 120 to the base station 102 to request additional resources if there is additional data to communicate with the device 108B on the licensed frequency band 106E. In such a case, no release signal is used because the resources assigned on the licensed frequency band may be predetermined or predefined in the time domain (e.g., *m-*subframes) and in the frequency domain (e.g., n-subbands), and are not necessarily continuously granted, and additional resources on the licensed frequency band may be requested by the device 108A as needed.

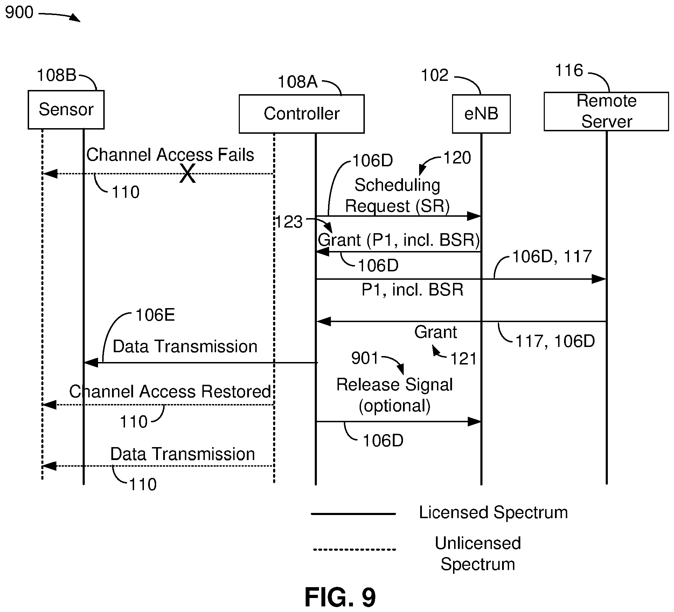

FIG. 9 is a call flow diagram 900 illustrating a second exemplary embodiment in accordance with various aspects of the present disclosure. Communication over unlicensed frequency bands is shown using dashed lines and communication over licensed frequency bands is shown using solid lines. In an exemplary embodiment, a device 108A detects a failure in communication with a device 108B over an unlicensed frequency band, shown using the "X" over communication link 110. Once the communication link failure is detected, the device 108A sends a scheduling request (SR) 120 to a base station 102 over a communication link 106D, requesting a grant of resources to allow the device 108A to communicate with the device 108B over a licensed frequency band. In an exemplary embodiment, the SR 120 may be a single bit sent on a dedicated physical uplink control channel (PUCCH) scheduling request resource over communication link 106D, occurring, for example, every n-th subframe, or the SR may be a sequence on a contention-based resource where a terminal identifier (ID) may be embedded in the bit-sequence, as described above.

In an exemplary embodiment, the base station 102 may, over communication link 106D, respond to the SR by assigning a limited grant 123 of resources on a licensed frequency band for a small data packet, *P1,* which may include buffer status report (BSR) information, an amount of power available, and other information as mentioned above.

The device 108A may send the small data packet, *P1,* to the remote server 116 (or an evolved packet core (EPC)) via the base station 102 over a licensed frequency band, such as, for example, communication links 106D and 117. In response to the small data packet, *P1,* the remote server 116 may assign a grant 121 of resources on a licensed frequency band to the device 108A, via the base station 102, over communication links 117 and 106D, for the device-to-device data transmission between the devices 108A and 108B on the licensed frequency band based on the information in the small data packet, *Pl.* Coordinating the communication over the licensed frequency band between the device 108A and the device 108B using the remote server 116 provides enhanced security over communicating the grant of resources on the second frequency band directly between the base station 102 and the device 108A.

The grant 121 of resources from the remote server 116 to the device 108A allows the device 108A to communicate with the device 108B on the licensed frequency band (for example, LTE or 5G resources (e.g. the entire LTE band if needed)) for the next predetermined amount of frequency and time resources or until an unlicensed frequency band becomes available, so that the device 108A may communicate with the device 108B over the communication link 106E using a licensed frequency band.

In an exemplary embodiment, if no scheduled data are received by the device 108B from the device 108A, or if data decoding at the device 108B fails for a period above the threshold (e.g., the 0.5 ms threshold mentioned herein) on the unlicensed frequency band, the device 108B may then switch bands to monitor the licensed frequency band 106, in anticipation of receiving a communication from the device 108A over the licensed frequency band 106E.

While transmitting on the licensed frequency band 106, the device 108A may continue monitoring the unlicensed frequency band 110. If the unlicensed frequency band 110 becomes available, the device 108A switches back to the unlicensed frequency band 110 and continues data transmission on the unlicensed frequency band 110, at which time the resources on the licensed frequency band 106E may be released.

In an exemplary embodiment, the device 108A may send a release signal 901 to the base station 102 using, for example, a SR-like release signal sent on the PUCCH of the communication link 106D requesting that the base station 102 release the resource on the licensed frequency band 106E.

In another exemplary embodiment, each grant of licensed frequency band resources from the base station 102 to the device 108A may only assign a limited amount of frequency and time resources, whereby the device 108A sends an additional scheduling request (SR) to the base station 102 to request additional resources if there is additional data to communicate with the device 108B on the licensed frequency band 106E. In such a case, no release signal is used because the resources assigned on the licensed frequency band may be predetermined or predefined in the time domain (e.g., m-subframes) and in the frequency domain (e.g., n-subbands), and are not necessarily continuously granted, and additional resources on the licensed frequency band may be requested by the device 108A as needed.

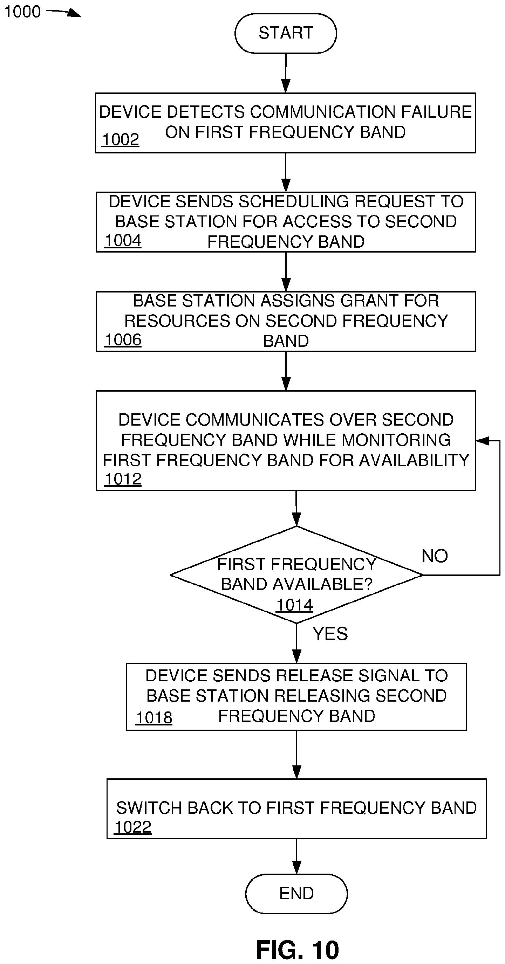

FIG. 10 is a flow chart illustrating an example of a method 1000 for communication, in accordance with various aspects of the present disclosure. The blocks in the method 1000 can be performed in or out of the order shown, and in some embodiments, can be performed at least in part in parallel.

In block 1002, a device 108 detects communication failure on a first frequency band. For example, a device 108A may detect failure of communication with device 108B over an unlicensed frequency band.

In block 1004, the device 108A sends a scheduling request (SR) to a base station 102 over a communication link 106D, requesting a grant of resources to communicate with the device 108B over a second frequency band. In an exemplary embodiment, the second frequency band may be a licensed frequency band.

In block 1006, the base station 102 may, over communication link 106D, respond to the SR by assigning a grant of resources on the second frequency band to the device 108A to allow the device 108A to communicate with the device 108B on the second frequency band.

In block 1012, the device 108A communicates over the second frequency band while monitoring the first frequency band.

In block 1014, it is determined whether the first frequency band is available. If, in block 1014, it is determined that the first frequency band is not available, then the process returns to block 1012. If, in block 1014, it is determined that the first frequency band is available, then the process proceeds to block 1018.

In block 1018 the device 108A sends a release signal to the base station, requesting a release of the resources on the second frequency band.

In block 1022, the device 108A ceases communicating on the second frequency band and switches back to the first frequency band for communication. For example, the device 108A and the device 108B may now resume communication over the unlicensed frequency band.

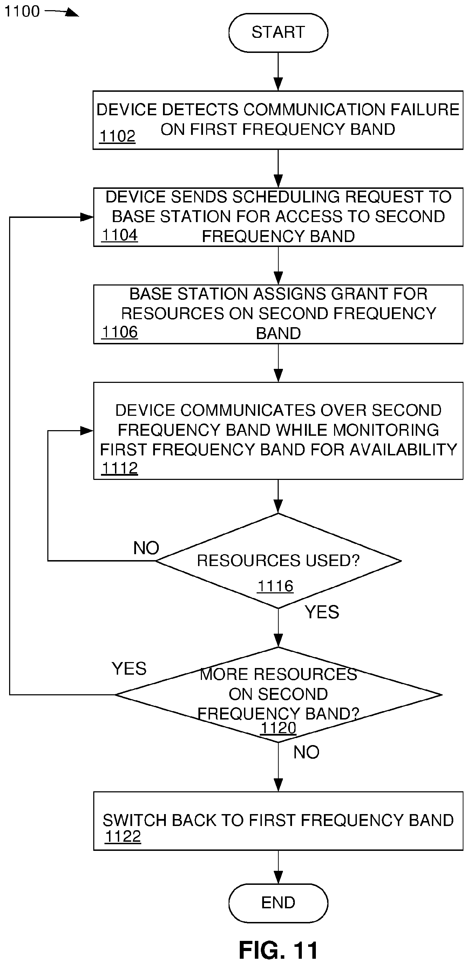

FIG. 11 is a flow chart illustrating an example of a method 1100 for communication, in accordance with various aspects of the present disclosure. The blocks in the method 1100 can be performed in or out of the order shown, and in some embodiments, can be performed at least in part in parallel.

In block 1102, a device 108 detects communication failure on a first frequency band. For example, a device 108A may detect failure of communication with device 108B over an unlicensed frequency band.

In block 1104, the device 108A sends a scheduling request (SR) to a base station 102 over a communication link 106D, requesting a grant of resources to communicate with the device 108B over a second frequency band. In an exemplary embodiment, the second frequency band may be a licensed frequency band.

In block 1106, the base station 102 may, over communication link 106D, respond to the SR by assigning a grant of resources to the device 108A to allow the device 108A to communicate with the device 108B on the second frequency band.

In block 1112, the device 108A communicates over the second frequency band while monitoring the first frequency band.

In block 1116, it is determined whether a predetermined amount of resources have been used. For example, it may be determined whether a predetermined or predefined amount of frequency and time resources on the second frequency band have been used. If, in block 1116, it is determined that a predetermined amount of frequency and time resources on the second frequency band have not been used, then the process returns to block 1112. If, in block 1116, it is determined that a predetermined amount of frequency and time resources on the second frequency band have been used, then the process proceeds to block 1120.

In block 1120, it is determined whether additional resources are needed on the second frequency band for communication between device 108A and 108B. If, in block 1120, it is determined that additional resources are needed on the second frequency band for communication between device 108A and 108B, then the process returns to block 1104 where the device 108 requests additional resources on the second frequency band. If, in block 1120, it is determined that additional resources are not needed on the second frequency band, then the process proceeds to block 1122.

In block 1122, the device 108 ceases communicating on the second frequency band and switches back to the first frequency band for communication. For example, the device 108A and the device 108B may now resume communication over the unlicensed frequency band.

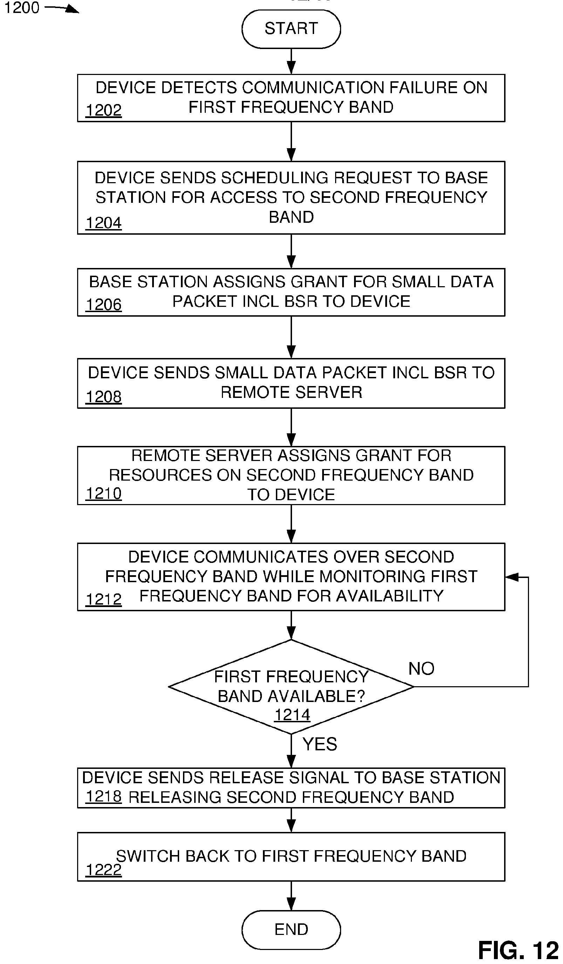

FIG. 12 is a flow chart illustrating an example of a method 1200 for communication, in accordance with various aspects of the present disclosure. The blocks in the method 1200 can be performed in or out of the order shown, and in some embodiments, can be performed at least in part in parallel.

In block 1202, a device 108 detects communication failure on a first frequency band. For example, a device 108A may detect failure of communication with device 108B over an unlicensed frequency band.

In block 1204, the device 108A sends a scheduling request (SR) to a base station 102 over a communication link 106D, requesting a grant of resources to communicate with the device 108B over a second frequency band. In an exemplary embodiment, the second frequency band may be a licensed frequency band.

In block 1206, the base station 102 may, over communication link 106D, respond to the SR by assigning to the device 108A a limited grant of resources on the second frequency band for a small data packet, *P1,* which may include buffer status report (BSR) information, and other information as mentioned herein.

In block 1208, the device 108A may send the small data packet, *P1,* to the remote server 116 (or an evolved packet core (EPC)) via the base station 102 over the second frequency band, for example, over communication links 106D and 117.

In block 1210, the remote server 116 may assign a grant of resources on the second frequency band to the device 108A, via the base station 102, over communication links 117 and 106D, for the device-to-device data transmission between the devices 108A and 108B on the licensed frequency band based on the information in the small data packet, *Pl.*

In block 1212, the device 108A communicates over the second frequency band while monitoring the first frequency band.

In block 1214, it is determined whether the first frequency band is available. If, in block 1214, it is determined that the first frequency band is not available, then the process returns to block 1212. If, in block 1214, it is determined that the first frequency band is available, then the process proceeds to block 1218.

In block 1218 the device 108A sends a release signal to the base station, requesting a release of the resources on the second frequency band.

In block 1222, the device 108 ceases communicating on the second frequency band and switches back to the first frequency band for communication. For example, the device 108A and the device 108B may now resume communication over the unlicensed frequency band.

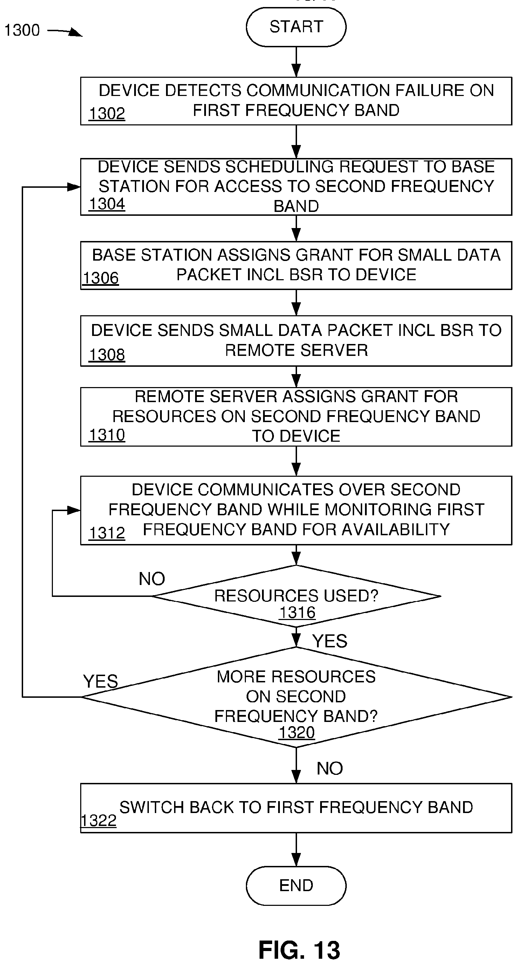

FIG. 13 is a flow chart illustrating an example of a method 1300 for communication, in accordance with various aspects of the present disclosure. The blocks in the method 1300 can be performed in or out of the order shown, and in some embodiments, can be performed at least in part in parallel.

In block 1302, a device 108 detects communication failure on a first frequency band. For example, a device 108A may detect failure of communication with device 108B over an unlicensed frequency band.

In block 1304, the device 108A sends a scheduling request (SR) to a base station 102 over a communication link 106D, requesting a grant of resources to communicate with the device 108B over a second frequency band. In an exemplary embodiment, the second frequency band may be a licensed frequency band.

In block 1306, the base station 102 may, over communication link 106D, respond to the SR by assigning to the device 108A a limited grant of resources on the second frequency band for a small data packet, *P1,* which may include buffer status report (BSR) information, and other information as mentioned herein.

In block 1308, the device 108A may send the small data packet, *P1,* to the remote server 116 (or an evolved packet core (EPC)) via the base station 102 over a second frequency band, for example, over communication links 106D and 117.

In block 1310, the remote server 116 may assign a grant of resources on the second frequency band to the device 108A, via the base station 102, over communication links 117 and 106D, for the device-to-device data transmission between the devices 108A and 108B on the licensed frequency band based on the information in the small data packet, *P1.*

In block 1312, the device 108A communicates over the second frequency band while monitoring the first frequency band.

In block 1316, it is determined whether a predetermined or predefined amount of resources have been used. For example, it may be determined whether a predetermined amount of frequency and time resources on the second frequency band have been used. If, in block 1316, it is determined that a predetermined amount of frequency and time resources on the second frequency band have not been used, then the process returns to block 1312. If, in block 1316, it is determined that a predetermined amount of frequency and time resources on the second frequency band have been used, then the process proceeds to block 1320.

In block 1320, it is determined whether additional resources are needed on the second frequency band for communication between device 108A and 108B. If, in block 1320, it is determined that additional resources are needed on the second frequency band for communication between device 108A and 108B, then the process returns to block 1304 where the device 108 requests additional resources on the second frequency band. If, in block 1320, it is determined that additional resources are not needed on the second frequency band, then the process proceeds to block 1322.

In block 1322, the device 108 ceases communicating on the second frequency band and switches back to the first frequency band for communication. For example, the device 108A and the device 108B may now resume communication over the unlicensed frequency band.

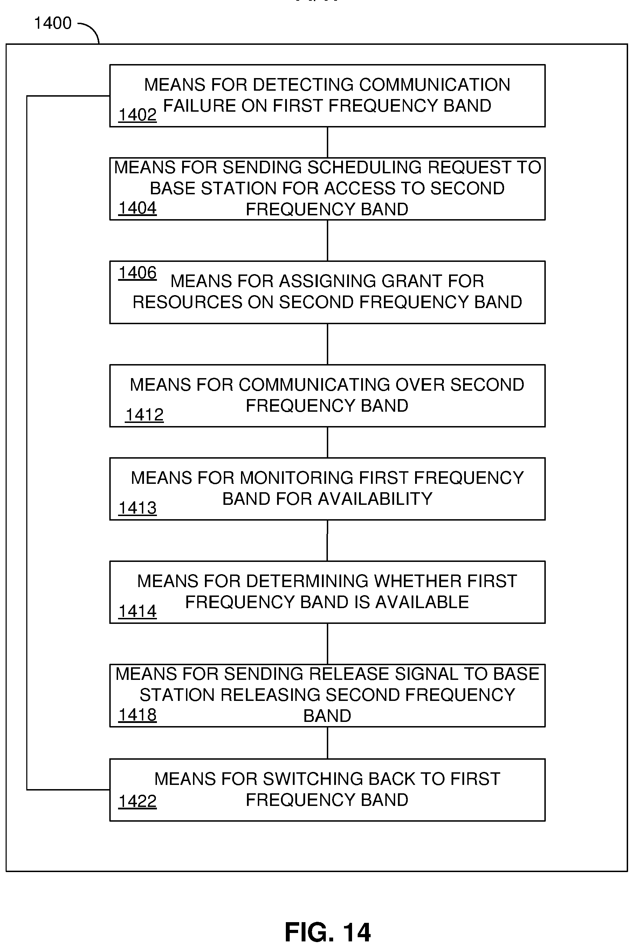

FIG. 14 is a functional block diagram of an apparatus 1400 for a communication system in accordance with various aspects of the present disclosure. The apparatus 1400 comprises means 1402 for detecting communication failure on a first frequency band. In certain embodiments, the means 1402 for detecting communication failure on a first frequency band can be configured to perform one or more of the function described in operation block 1002 of method 1000 (FIG. 10). In an exemplary embodiment, the means 1402 for detecting communication failure on a first frequency band may comprise a device 108A detecting failure of communication with device 108B over a first frequency band, such as an unlicensed frequency band.

The apparatus 1400 further comprises means 1404 for sending a scheduling request (SR) to a base station for requesting access to a second frequency band. In certain embodiments, the means 1404 for sending a scheduling request (SR) to a base station for requesting access to a second frequency band can be configured to perform one or more of the function described in operation block 1004 of method 1000 (FIG. 10). In an exemplary embodiment, the means 1404 for sending a scheduling request (SR) to a base station for requesting access to a second frequency band may comprise the device 108A sending a scheduling request (SR) to a base station 102 requesting resources to access a licensed frequency band.

The apparatus 1400 further comprises means 1406 for assigning a grant for resources on the second frequency band. In certain embodiments, the means 1406 for assigning a grant for resources on the second frequency band can be configured to perform one or more of the function described in operation block 1006 of method 1000 (FIG. 10). In an exemplary embodiment, the means 1406 for assigning a grant for resources on the second frequency band may comprise the base station 102 sending a grant of resources on the licensed frequency band to the device 108A to allow the device 108A to communicate with the device 108B on the second frequency band.

The apparatus 1400 further comprises means 1412 for communicating on the second frequency band. In certain embodiments, the means 1412 for communicating on the second frequency band can be configured to perform one or more of the function described in operation block 1012 of method 1000 (FIG. 10). In an exemplary embodiment, the means 1412 for communicating on the second frequency band may comprise the device 108A communicating with the device 108B over a licensed frequency band.

The apparatus 1400 further comprises means 1413 for monitoring the first frequency band. In certain embodiments, the means 1413 for monitoring the first frequency band can be configured to perform one or more of the function described in operation block 1012 of method 1000 (FIG. 10). In an exemplary embodiment, the means 1413 for monitoring the first frequency band may comprise the device 108A monitoring the unlicensed frequency band for availability.

The apparatus 1400 further comprises means 1414 for determining whether the first frequency band is available. In certain embodiments, the means 1414 for determining whether the first frequency band is available can be configured to perform one or more of the function described in operation block 1014 of method 1000 (FIG. 10). In an exemplary embodiment, the means 1414 for determining whether the first frequency band is available may comprise the device 108A determining whether the unlicensed frequency band has available communication bandwidth to support communication between the device 108A and the device 108B.

The apparatus 1400 further comprises means 1418 for sending a release signal. In certain embodiments, the means 1418 for sending a release signal can be configured to perform one or more of the function described in operation block 1018 of method 1000 (FIG. 10). In an exemplary embodiment, the means 1418 for sending a release signal may comprise the device 108A sending a release signal to the base station 102, requesting a release of the resources on the second frequency band.

The apparatus 1400 further comprises means 1422 for switching back to the first frequency band for communication. In certain embodiments, the means 1422 for switching back to the first frequency band for communication can be configured to perform one or more of the function described in operation block 1022 of method 1000 (FIG. 10). In an exemplary embodiment, the means 1422 for switching back to the first frequency band for communication may comprise the device 108A and the device 108B resuming communication over the unlicensed frequency band.

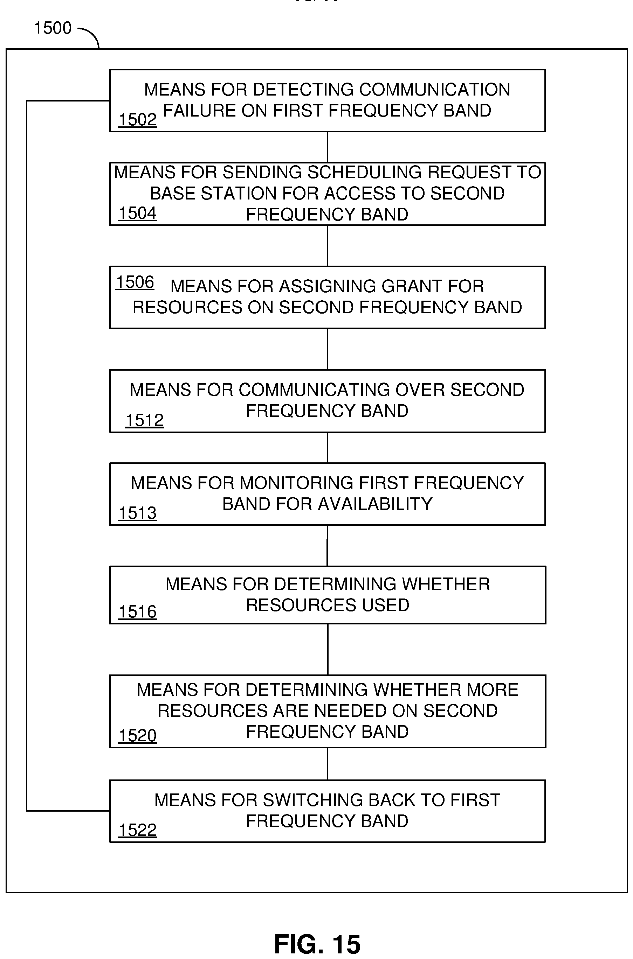

FIG. 15 is a functional block diagram of an apparatus 1500 for a communication system in accordance with various aspects of the present disclosure. The apparatus 1500 comprises means 1502 for detecting communication failure on a first frequency band. In certain embodiments, the means 1502 for detecting communication failure on a first frequency band can be configured to perform one or more of the function described in operation block 1102 of method 1100 (FIG. 11). In an exemplary embodiment, the means 1502 for detecting communication failure on a first frequency band may comprise a device 108A detecting failure of communication with device 108B over an unlicensed frequency band.

The apparatus 1500 further comprises means 1504 for sending a scheduling request (SR) to a base station for requesting access to a second frequency band. In certain embodiments, the means 1504 for sending a scheduling request (SR) to a base station for requesting access to a second frequency band can be configured to perform one or more of the function described in operation block 1104 of method 1100 (FIG. 11). In an exemplary embodiment, the means 1504 for sending a scheduling request (SR) to a base station for requesting access to a second frequency band may comprise the device 108A sending a scheduling request (SR) to a base station 102 requesting resources to access a licensed frequency band.

The apparatus 1500 further comprises means 1506 for assigning a grant for resources on the second frequency band. In certain embodiments, the means 1506 for assigning a grant for resources on the second frequency band can be configured to perform one or more of the function described in operation block 1106 of method 1100 (FIG. 11). In an exemplary embodiment, the means 1506 for assigning a grant for resources on the second frequency band may comprise the base station 102 sending a grant of resources on the licensed frequency band to the device 108A to allow the device 108A to communicate with the device 108B on the second frequency band.

The apparatus 1500 further comprises means 1512 for communicating on the second frequency band. In certain embodiments, the means 1512 for communicating on the second frequency band can be configured to perform one or more of the function described in operation block 1112 of method 1100 (FIG. 11). In an exemplary embodiment, the means 1512 for communicating on the second frequency band may comprise the device 108A communicating with the device 108B over a licensed frequency band.

The apparatus 1500 further comprises means 1513 for monitoring the first frequency band. In certain embodiments, the means 1513 for monitoring the first frequency band can be configured to perform one or more of the function described in operation block 1112 of method 1100 (FIG. 11). In an exemplary embodiment, the means 1513 for monitoring the first frequency band may comprise the device 108A monitoring the unlicensed frequency band for availability.

The apparatus 1500 further comprises means 1516 for determining whether a predetermined amount of frequency and time resources on the second frequency band have been used. In certain embodiments, the means 1516 for determining whether a predetermined amount of frequency and time resources on the second frequency band have been used can be configured to perform one or more of the function described in operation block 1116 of method 1100 (FIG. 11). In an exemplary embodiment, the means 1516 for determining whether a predetermined amount of frequency and time resources on the second frequency band have been used may comprise the device 108 determining whether the predetermined or predefined amount of time and frequency resources on the second frequency band have been used.

The apparatus 1500 further comprises means 1520 for determining whether additional resources are needed on the second frequency band. In certain embodiments, the means 1520 for determining whether additional resources are needed on the second frequency band can be configured to perform one or more of the function described in operation block 1120 of method 1100 (FIG. 11). In an exemplary embodiment, the means 1520 for determining whether additional resources are needed on the second frequency band may comprise the device 108A determining whether there is additional data to communicate with the device 108B, and if there is additional data to communicate, the device 108A requesting additional resources on the second frequency band.

The apparatus 1500 further comprises means 1522 for switching back to the first frequency band for communication. In certain embodiments, the means 1522 for switching back to the first frequency band for communication can be configured to perform one or more of the function described in operation block 1122 of method 1100 (FIG. 11). In an exemplary embodiment, the means 1522 for switching back to the first frequency band for communication may comprise the device 108A and the device 108B resuming communication over the unlicensed frequency band.

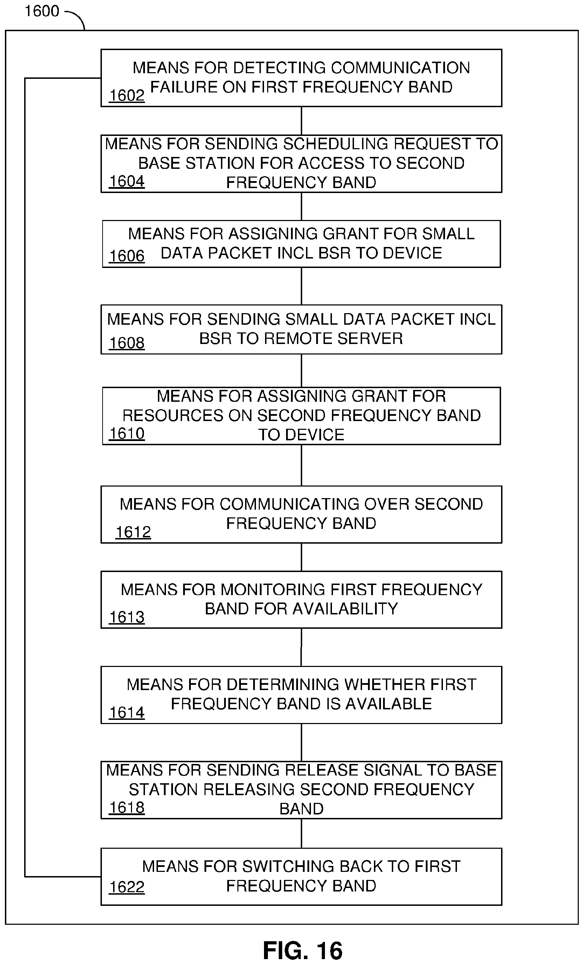

FIG. 16 is a functional block diagram of an apparatus 1600 for a communication system in accordance with various aspects of the present disclosure. The apparatus 1600 comprises means 1602 for detecting communication failure on a first frequency band. In certain embodiments, the means 1602 for detecting communication failure on a first frequency band can be configured to perform one or more of the function described in operation block 1202 of method 1200 (FIG. 12). In an exemplary embodiment, the means 1602 for detecting communication failure on a first frequency band may comprise a device 108A detecting failure of communication with device 108B over an unlicensed frequency band.

The apparatus 1600 further comprises means 1604 for sending a scheduling request (SR) to a base station for requesting access to a second frequency band. In certain embodiments, the means 1604 for sending a scheduling request (SR) to a base station for requesting access to a second frequency band can be configured to perform one or more of the function described in operation block 1204 of method 1200 (FIG. 12). In an exemplary embodiment, the means 1604 for sending a scheduling request (SR) to a base station for requesting access to a second frequency band may comprise the device 108A sending a scheduling request (SR) to a base station 102 requesting resources to access a licensed frequency band.

The apparatus 1600 further comprises means 1606 for assigning a grant for a small data packet, *P1,* which may include buffer status report (BSR) information. In certain embodiments, the means 1606 for assigning a grant for a small data packet, *P1,* which may include buffer status report (BSR) information can be configured to perform one or more of the function described in operation block 1206 of method 1200 (FIG. 12). In an exemplary embodiment, the means 1606 for assigning a grant for a small data packet, *P1,* which may include buffer status report (BSR) information may comprise the base station 102 assigning to the device 108A a grant for resources on a second frequency band for a small data packet, *P1,* which may include buffer status report (BSR) information.

The apparatus 1600 further comprises means 1608 for sending a small data packet, *P1,* including buffer status report (BSR) information. In certain embodiments, the means 1608 for sending a small data packet, *P1,* including buffer status report (BSR) information can be configured to perform one or more of the function described in operation block 1208 of method 1200 (FIG. 12). In an exemplary embodiment, the means 1608 for sending a small data packet, *P1,* including buffer status report (BSR) information may comprise the device 108A sending the small data packet, *P1,* to the remote server 116 (or an evolved packet core (EPC)) via the base station 102 on the second frequency band, over, for example, communication links 106D and 117.

The apparatus 1600 further comprises means 1610 for assigning a grant of resources on the second frequency band. In certain embodiments, the means 1610 for assigning a grant of resources on the second frequency band can be configured to perform one or more of the function described in operation block 1210 of method 1200 (FIG. 12). In an exemplary embodiment, the means 1610 for assigning a grant of resources on the second frequency band may comprise the remote server 116 assigning a grant of resources on the second frequency band to the device 108A, via the base station 102, over communication links 117 and 106D, for the device-to-device data transmission between the devices 108A and 108B on the licensed frequency band based on the information in the small data packet, *Pl.*

The apparatus 1600 further comprises means 1612 for communicating on the second frequency band. In certain embodiments, the means 1612 for communicating on the second frequency band can be configured to perform one or more of the function described in operation block 1212 of method 1200 (FIG. 12). In an exemplary embodiment, the means 1612 for communicating on the second frequency band may comprise the device 108A communicating with the device 108B over a licensed frequency band.

The apparatus 1600 further comprises means 1613 for monitoring the first frequency band. In certain embodiments, the means 1613 for monitoring the first frequency band can be configured to perform one or more of the function described in operation block 1212 of method 1200 (FIG. 12). In an exemplary embodiment, the means 1613 for monitoring the first frequency band may comprise the device 108A monitoring the unlicensed frequency band for availability.

The apparatus 1600 further comprises means 1614 for determining whether the first frequency band is available. In certain embodiments, the means 1614 for determining whether the first frequency band is available can be configured to perform one or more of the function described in operation block 1214 of method 1200 (FIG. 12). In an exemplary embodiment, the means 1614 for determining whether the first frequency band is available may comprise the device 108A determining whether the unlicensed frequency band has available communication bandwidth to support communication between the device 108A and the device 108B.

The apparatus 1600 further comprises means 1618 for sending a release signal. In certain embodiments, the means 1618 for sending a release signal can be configured to perform one or more of the function described in operation block 1218 of method 1200 (FIG. 12). In an exemplary embodiment, the means 1618 for sending a release signal may comprise the device 108A sending a release signal to the base station 102, requesting a release of the resources on the second frequency band.

The apparatus 1600 further comprises means 1622 for switching back to the first frequency band for communication. In certain embodiments, the means 1622 for switching back to the first frequency band for communication can be configured to perform one or more of the function described in operation block 1222 of method 1200 (FIG. 12). In an exemplary embodiment, the means 1622 for switching back to the first frequency band for communication may comprise the device 108A and the device 108B resuming communication over the unlicensed frequency band.

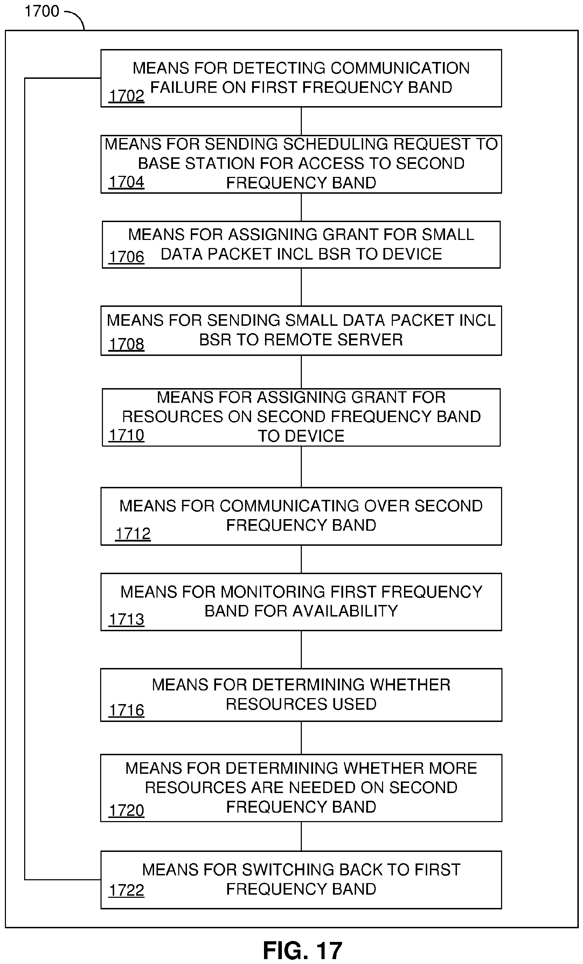

FIG. 17 is a functional block diagram of an apparatus 1700 for a communication system in accordance with various aspects of the present disclosure. The apparatus 1700 comprises means 1702 for detecting communication failure on a first frequency band. In certain embodiments, the means 1702 for detecting communication failure on a first frequency band can be configured to perform one or more of the function described in operation block 1302 of method 1300 (FIG. 13). In an exemplary embodiment, the means 1702 for detecting communication failure on a first frequency band may comprise a device 108A detecting failure of communication with device 108B over an unlicensed frequency band.

The apparatus 1700 further comprises means 1704 for sending a scheduling request (SR) to a base station for requesting access to a second frequency band. In certain embodiments, the means 1704 for sending a scheduling request (SR) to a base station for requesting access to a second frequency band can be configured to perform one or more of the function described in operation block 1304 of method 1300 (FIG. 13). In an exemplary embodiment, the means 1704 for sending a scheduling request (SR) to a base station for requesting access to a second frequency band may comprise the device 108A sending a scheduling request (SR) to a base station 102 requesting access to a licensed frequency band.

The apparatus 1700 further comprises means 1706 for assigning a grant for a small data packet, *P1,* which may include buffer status report (BSR) information. In certain embodiments, the means 1706 for assigning a grant for a small data packet, *P1,* which may include buffer status report (BSR) information can be configured to perform one or more of the function described in operation block 1306 of method 1300 (FIG. 13). In an exemplary embodiment, the means 1706 for assigning a grant for a small data packet, *P1,* which may include buffer status report (BSR) information may comprise the base station 102 assigning to the device 108A a grant for resources on the second frequency band for a small data packet, *P1,* which may include buffer status report (BSR) information.

The apparatus 1700 further comprises means 1708 for sending a small data packet, *P1,* including buffer status report (BSR) information. In certain embodiments, the means 1708 for sending a small data packet, *P1,* including buffer status report (BSR) information can be configured to perform one or more of the function described in operation block 1308 of method 1300 (FIG. 13). In an exemplary embodiment, the means 1708 for sending a small data packet, *P1,* including buffer status report (BSR) information may comprise the device 108A sending the small data packet, *P1,* to the remote server 116 (or an evolved packet core (EPC)) via the base station 102 on the second frequency band over, for example, communication links 106D and 117.

The apparatus 1700 further comprises means 1710 for assigning a grant of resources on the second frequency band. In certain embodiments, the means 1710 for assigning a grant of resources on the second frequency band can be configured to perform one or more of the function described in operation block 1310 of method 1300 (FIG. 13). In an exemplary embodiment, the means 1710 for assigning a grant of resources on the second frequency band may comprise the remote server 116 assigning a grant of resources on the second frequency band to the device 108A, via the base station 102, over communication links 117 and 106D, for the device-to-device data transmission between the devices 108A and 108B on the licensed frequency band based on the information in the small data packet, *Pl.*

The apparatus 1700 further comprises means 1712 for communicating on the second frequency band. In certain embodiments, the means 1712 for communicating on the second frequency band can be configured to perform one or more of the function described in operation block 1312 of method 1300 (FIG. 13). In an exemplary embodiment, the means 1712 for communicating on the second frequency band may comprise the device 108A communicating with the device 108B over a licensed frequency band.

The apparatus 1700 further comprises means 1713 for monitoring the first frequency band. In certain embodiments, the means 1713 for monitoring the first frequency band can be configured to perform one or more of the function described in operation block 1312 of method 1300 (FIG. 13). In an exemplary embodiment, the means 1713 for monitoring the first frequency band may comprise the device 108A monitoring the unlicensed frequency band for availability.

The apparatus 1700 further comprises means 1716 for determining whether a predetermined amount of frequency and time resources on the second frequency band have been used. In certain embodiments, the means 1716 for determining whether a predetermined amount of frequency and time resources on the second frequency band have been used can be configured to perform one or more of the function described in operation block 1316 of method 1300 (FIG. 13). In an exemplary embodiment, the means 1716 for determining whether a predetermined amount of frequency and time resources on the second frequency band have elapsed may comprise the device 108 determining whether the predetermined or preassigned time and frequency resources on the second frequency band have been used.

The apparatus 1700 further comprises means 1720 for determining whether additional resources are needed on the second frequency band. In certain embodiments, the means 1720 for determining whether additional resources are needed on the second frequency band can be configured to perform one or more of the function described in operation block 1320 of method 1300 (FIG. 13). In an exemplary embodiment, the means 1720 for determining whether additional resources are needed on the second frequency band may comprise the device 108A determining whether there is additional data to communicate with the device 108B, and if there is additional data to communication, requesting additional resources on the second frequency band.

The apparatus 1700 further comprises means 1722 for switching back to the first frequency band for communication. In certain embodiments, the means 1722 for switching back to the first frequency band for communication can be configured to perform one or more of the function described in operation block 1322 of method 1300 (FIG. 13). In an exemplary embodiment, the means 1722 for switching back to the first frequency band for communication may comprise the device 108A and the device 108B resuming communication over the unlicensed frequency band.

The detailed description set forth above in connection with the appended drawings describes examples and does not represent the only examples that may be implemented or that are within the scope of the claims. The terms "example" and "exemplary," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of" or "one or more of") indicates a disjunctive list such that, for example, a list of "at least one of A, B, or C" means A or B or C or AB or AC or BC or ABC (i.e., A and B and C).

The previous description of the disclosure is provided to enable a person skilled in the art to make or use the disclosure. Various modifications to the disclosure will be readily apparent to those skilled in the art. Thus, the disclosure is not to be limited to the examples and designs described herein but is to be accorded the broadest scope consistent with the definition provided by the appended claims.

## Claims

1. A method for wireless communication, comprising:
communicating between a first communication device (108A) and a second communication device (108B) using a first frequency band;
if communication on the first frequency band fails, communicating a scheduling request, SR, from the first communication device to a third communication device (102) requesting an assignment of communication resources associated with a second frequency band (1202, 1304);
receiving a grant of communication resources on the second frequency band (1310) wherein receiving the grant of communication resources on the second frequency band further comprises:
receiving from the third communication device a grant of communication resources on the second frequency band to send a data packet, *P1,* the
data packet, *P1,* comprising buffer status report, BSR, information:
transmitting the data packet, *P1,* to a fourth communication device (116); and
receiving from the fourth communication device the grant of communication resources on the second frequency band; and
communicating between the first communication device and the second communication device using the second frequency band.

2. The method of claim 1, wherein the first frequency band comprises unlicensed communication spectrum having one or more of a device-to-device communication resource chosen from a Bluetooth band and an IEEE 802.11 band.

3. The method of claim 1, wherein the second frequency band comprises licensed communication spectrum having one or more of an LTE communication resource and a 5G communication resource.

4. The method of claim 1, wherein receiving the grant of communication resources on the second frequency band further comprises receiving the grant of communication resources on the second frequency band directly from the third communication device.

5. The method of claim 1, further comprising:
when the first frequency band becomes available, causing the first communication device and the second communication device to cease communicating on the second frequency band and resume communicating on the first frequency band.

6. The method of claim 5, further comprising sending a request to the third communication device to release the communication resources on the second frequency band.

7. The method of claim 1, further comprising:
after a predetermined amount of communication resources on the second frequency band have elapsed, causing the first communication device and the second communication device to cease communicating on the second frequency band and resume communicating on the first frequency band.

8. The method of claim 1, after a predetermined amount of communication resources on the second frequency band have elapsed, causing the first communication device to request additional communication resources on the second frequency band.

9. A system for communication, comprising:
a first communication device (108A) and a second communication device (108B) configured to communicate using a first frequency band;
the first communication device configured to communicate a scheduling request, SR, to a third communication device (102) requesting an assignment of communication resources associated with a second frequency band if communication on the first frequency band fails;
the first communication device configured to receive a grant of communication resources on the second frequency band wherein receiving the grant of communication resources on the second frequency band further comprises:
receiving from the third communication device a grant of communication resources on the second frequency band to send a data packet, *P1,* the data packet, *P1,* comprising buffer status report, BSR, information:
transmitting the data packet, *P1,* to a fourth communication device (116); and
receiving from the fourth communication device the grant of communication resources on the second frequency band; and
the first communication device and the second communication device configured to communicate using the second frequency band.

10. The system of claim 9, wherein the first frequency band comprises unlicensed communication spectrum having one or more of a device-to-device communication resource chosen from a Bluetooth band and an IEEE 802.11 band.

11. The system of claim 9, wherein the second frequency band comprises licensed communication spectrum having one or more of an LTE communication resource and a 5G communication resource.

12. The system of claim 9, wherein receiving the grant of communication resources on the second frequency band further comprises receiving the grant of communication resources on the second frequency band directly from the third communication device.

13. The system of claim 9, further comprising one of the following:
i) when the first frequency band becomes available, causing the first communication device and the second communication device to cease communicating on the second frequency band and resume communicating on the first frequency band;
ii) after a predetermined amount of communication resources on the second frequency band have elapsed, causing the first communication device and the second communication device to cease communicating on the second frequency band and resume communicating on the first frequency band; or
iii) after a predetermined amount of communication resources on the second frequency band have elapsed, causing the first communication device to request additional communication resources on the second frequency band.

14. The system of claim 13, option i), further comprising sending a request to the third communication device to release the communication resources on the second frequency band.

15. A non-transitory computer-readable medium storing computer executable code for communication, the code executable by a processor to control a method comprising:
communicating between a first communication device (108A) and a second communication device (108B) using a first frequency band;
if communication on the first frequency band fails, communicating a scheduling request, SR, from the first communication device to a third communication device (102) requesting an assignment of communication resources associated with a second frequency band;
receiving a grant of communication resources on the second frequency band wherein receiving the grant of resources on the second frequency band further comprises:
receiving from the third communication device a grant of communication resources on the second frequency band to send a data packet, *P1,* the data packet, *P1,* comprising buffer status report, BSR, information:
transmitting the data packet, *P1,* to a fourth communication device (116); and
receiving from the fourth communication device the grant of resources on the second frequency band; and
communicating between the first communication device and the second communication device using the second frequency band.

## Patentansprüche

1. Ein Verfahren zur drahtlosen Kommunikation, wobei das Verfahren Folgendes aufweist:
Kommunizieren zwischen einer ersten Kommunikationseinrichtung (108A) und einer zweiten Kommunikationseinrichtung (108B) unter Verwendung eines ersten Frequenzbandes;
wenn die Kommunikation auf dem ersten Frequenzband fehlschlägt, Übertragen einer Planungsanforderung, SR (SR = Scheduling Request), von der ersten Kommunikationseinrichtung zu einer dritten Kommunikationseinrichtung (102), die eine Zuteilung von Kommunikationsressourcen anfordert, die mit einem zweiten Frequenzband (1202, 1304) verbunden sind;
Empfangen einer Zuteilung von Kommunikationsressourcen auf dem zweiten Frequenzband (1310), wobei das Empfangen der Zuteilung von Kommunikationsressourcen auf dem zweiten Frequenzband ferner aufweist:
Empfangen einer Zuteilung von Kommunikationsressourcen auf dem zweiten Frequenzband von der dritten Kommunikationseinrichtung, um ein Datenpaket, P1, zu senden, wobei das Datenpaket, P1, Pufferstatusberichtsinformationen, BSR (BSR = Buffer Status Report), aufweist:
Übertragen des Datenpakets, P1, an eine vierte Kommunikationseinrichtung
(116); und
Empfangen der Zuteilung von Kommunikationsressourcen auf dem zweiten Frequenzband von der vierten Kommunikationseinrichtung; und
Kommunizieren zwischen der ersten Kommunikationseinrichtung und der zweiten Kommunikationseinrichtung unter Verwendung des zweiten Frequenzbandes.

2. Verfahren nach Anspruch 1, wobei das erste Frequenzband ein nicht lizenziertes Kommunikationsspektrum mit einer oder mehreren Kommunikationsressourcen von Gerät zu Gerät aufweist, die aus einem Bluetooth-Band und einem IEEE 802.11 -Band ausgewählt sind.

3. Verfahren nach Anspruch 1, wobei das zweite Frequenzband ein lizenziertes Kommunikationsspektrum mit einer oder mehreren LTE-Kommunikationsressourcen und einer 5G-Kommunikationsressource aufweist.

4. Verfahren nach Anspruch 1, wobei das Empfangen der Zuteilung von Kommunikationsressourcen auf dem zweiten Frequenzband ferner das Empfangen der Zuteilung von Kommunikationsressourcen auf dem zweiten Frequenzband direkt von der dritten Kommunikationseinrichtung aufweist.

5. Verfahren nach Anspruch 1, das ferner Folgendes aufweist:
wenn das erste Frequenzband verfügbar wird, Veranlassen der ersten Kommunikationseinrichtung und der zweiten Kommunikationseinrichtung, die Kommunikation auf dem zweiten Frequenzband zu beenden und die Kommunikation auf dem ersten Frequenzband wieder aufzunehmen.

6. Verfahren nach Anspruch 5, ferner aufweisend das Senden einer Aufforderung an die dritte Kommunikationseinrichtung, die Kommunikationsressourcen auf dem zweiten Frequenzband freizugeben.

7. Verfahren nach Anspruch 1, das weiterhin aufweist:
nachdem eine vorbestimmte Menge an Kommunikationsressourcen auf dem zweiten Frequenzband verstrichen ist, Veranlassen der ersten Kommunikationseinrichtung und der zweiten Kommunikationseinrichtung, die Kommunikation auf dem zweiten Frequenzband zu beenden und die Kommunikation auf dem ersten Frequenzband wieder aufzunehmen.

8. Verfahren nach Anspruch 1, wobei, nachdem eine vorbestimmte Menge an Kommunikationsressourcen auf dem zweiten Frequenzband abgelaufen ist, die erste Kommunikationseinrichtung veranlasst wird, zusätzliche Kommunikationsressourcen auf dem zweiten Frequenzband anzufordern.

9. Ein System zur Kommunikation, das Folgendes aufweist
eine erste Kommunikationseinrichtung (108A) und eine zweite Kommunikationseinrichtung (108B), die so konfiguriert sind, dass sie unter Verwendung eines ersten Frequenzbandes kommunizieren;
die erste Kommunikationseinrichtung, so konfiguriert ist, dass sie eine Planungsanforderung, SR (SR = Scheduling Request), an eine dritte Kommunikationseinrichtung (102) übermittelt, die eine Zuteilung von Kommunikationsressourcen anfordert, die mit einem zweiten Frequenzband verbunden sind, wenn die Kommunikation auf dem ersten Frequenzband fehlschlägt;
die erste Kommunikationseinrichtung so konfiguriert ist, dass sie eine Zuteilung von Kommunikationsressourcen auf dem zweiten Frequenzband empfängt, wobei das Empfangen der Zuteilung von Kommunikationsressourcen auf dem zweiten Frequenzband ferner aufweist:
Empfangen einer Zuteilung von Kommunikationsressourcen auf dem zweiten Frequenzband von der dritten Kommunikationseinrichtung, um ein Datenpaket, P1, zu senden, wobei das Datenpaket, P1, Pufferstatusberichtsinformationen, BSR (BSR = Buffer Status Report), aufweist:
Übertragen des Datenpakets, P1, zu einer vierten Kommunikationseinrichtung (116); und
Empfangen der Zuteilung von Kommunikationsressourcen auf dem zweiten Frequenzband von der vierten Kommunikationseinrichtung; und
die erste Kommunikationseinrichtung und die zweite Kommunikationseinrichtung so konfiguriert sind, dass sie unter Verwendung des zweiten Frequenzbandes kommunizieren.

10. System nach Anspruch 9, wobei das erste Frequenzband ein nicht lizenziertes Kommunikationsspektrum mit einer oder mehreren Kommunikationsressourcen von Gerät zu Gerät aufweist, die aus einem Bluetooth-Band und einem IEEE 802.11 -Band ausgewählt sind.

11. System nach Anspruch 9, wobei das zweite Frequenzband ein lizenziertes Kommunikationsspektrum mit einer LTE-Kommunikationsressource oder einer 5G-Kommunikationsressource oder mehreren davon aufweist.

12. System nach Anspruch 9, wobei das Empfangen der Zuteilung von Kommunikationsressourcen auf dem zweiten Frequenzband ferner das Empfangen der Zuteilung von Kommunikationsressourcen auf dem zweiten Frequenzband direkt von der dritten Kommunikationseinrichtung aufweist.

13. System nach Anspruch 9, das außerdem eine der folgenden Maßnahmen aufweist:
i) wenn das erste Frequenzband verfügbar wird, Veranlassen der ersten Kommunikationseinrichtung und der zweiten Kommunikationseinrichtung, die Kommunikation auf dem zweiten Frequenzband zu beenden und die Kommunikation auf dem ersten Frequenzband wieder aufzunehmen;
ii) nachdem eine vorbestimmte Anzahl von Kommunikationsressourcen auf dem zweiten Frequenzband verstrichen ist, das erste Kommunikationsgerät und das zweite Kommunikationsgerät veranlassen, die Kommunikation auf dem zweiten Frequenzband zu beenden und die Kommunikation auf dem ersten Frequenzband wieder aufzunehmen; oder
iii) nachdem eine vorbestimmte Menge an Kommunikationsressourcen auf dem zweiten Frequenzband abgelaufen ist, veranlasst die erste Kommunikationseinrichtung, zusätzliche Kommunikationsressourcen auf dem zweiten Frequenzband anzufordern.

14. Das System nach Anspruch 13, Option i), weist ferner das Senden einer Anforderung an das dritte Kommunikationsgerät auf, um die Kommunikationsressourcen auf dem zweiten Frequenzband freizugeben.

15. Nicht-transitorisches computerlesbares Medium, das computerausführbaren Code für die Kommunikation speichert, wobei der Code von einem Prozessor ausgeführt werden kann, um ein Verfahren zu steuern, das Folgendes aufweist:
Kommunizieren zwischen einer ersten Kommunikationseinrichtung (108A) und einer zweiten Kommunikationseinrichtung (108B) unter Verwendung eines ersten Frequenzbandes;
wenn die Kommunikation auf dem ersten Frequenzband fehlschlägt, Übertragen einer Planungsanforderung, SR (SR = Scheduling Request), von der ersten Kommunikationseinrichtung zu einer dritten Kommunikationseinrichtung (102), die eine Zuteilung von Kommunikationsressourcen anfordert, die mit einem zweiten Frequenzband verbunden sind;
Empfangen einer Zuteilung von Kommunikationsressourcen auf dem zweiten Frequenzband, wobei das Empfangen der Zuteilung von Ressourcen auf dem zweiten Frequenzband ferner aufweist:
Empfangen einer Zuteilung von Kommunikationsressourcen auf dem zweiten Frequenzband von der dritten Kommunikationseinrichtung, um ein Datenpaket, P1, zu senden, wobei das Datenpaket, P1, Pufferstatusberichtsinformationen, BSR (BSR = Buffer Status Report), aufweist:
Übertragen des Datenpakets, P1, zu einer vierten Kommunikationseinrichtung (116); und
Empfangen der Zuteilung von Ressourcen auf dem zweiten Frequenzband von der vierten Kommunikationseinrichtung; und
Kommunizieren zwischen der ersten Kommunikationseinrichtung und der zweiten Kommunikationseinrichtung unter Verwendung des zweiten Frequenzbandes.

## Revendications

1. Un procédé de communication sans fil, comprenant :
une communication entre un premier dispositif de communication (108A) et un deuxième dispositif de communication (108B) au moyen d'une première bande de fréquences,
si la communication sur la première bande de fréquences échoue, la communication d'une demande de planification, SR, à partir du premier dispositif de communication à un troisième dispositif de communication (102) demandant une affectation de ressources de communication associées à une deuxième bande de fréquences (1202, 1304),
la réception d'un octroi de ressources de communication sur la deuxième bande de fréquences (1310) où la réception de l'octroi de ressources de communication sur la deuxième bande de fréquences comprend en outre :
la réception à partir du troisième dispositif de communication d'un octroi de ressources de communication sur la deuxième bande de fréquences destiné à l'envoi d'un paquet de données, *P1,* le paquet de données, *P1,* contenant des informations de rapport d'état de mémoire tampon, BSR,
la transmission du paquet de données, *P1,* à un quatrième dispositif de communication (116), et
la réception à partir du quatrième dispositif de communication de l'octroi de ressources de communication sur la deuxième bande de fréquences, et
une communication entre le premier dispositif de communication et le deuxième dispositif de communication au moyen de la deuxième bande de fréquences.

2. Le procédé selon la Revendication 1, où la première bande de fréquences comprend un spectre de communication sans licence possédant un ou plusieurs éléments parmi une ressource de communication de dispositif à dispositif choisie parmi une bande Bluetooth et une bande IEEE 802.11.

3. Le procédé selon la Revendication 1, où la deuxième bande de fréquences comprend un spectre de communication avec licence possédant un ou plusieurs éléments parmi une ressource de communication LTE et une ressource de communication 5G.

4. Le procédé selon la Revendication 1, où la réception de l'octroi de ressources de communication sur la deuxième bande de fréquences comprend en outre la réception de l'octroi de ressources de communication sur la deuxième bande de fréquences directement à partir du troisième dispositif de communication.

5. Le procédé selon la Revendication 1, comprenant en outre :
lorsque la première bande de fréquences devient disponible, l'opération consistant à amener le premier dispositif de communication et le deuxième dispositif de communication à cesser la communication sur la deuxième bande de fréquences et à reprendre la communication sur la première bande de fréquences.

6. Le procédé selon la Revendication 5, comprenant en outre l'envoi d'une demande au troisième dispositif de communication de façon à libérer les ressources de communication sur la deuxième bande de fréquences.

7. Le procédé selon la Revendication 1, comprenant en outre :
après l'écoulement d'une quantité de ressources de communication prédéterminée sur la deuxième bande de fréquences, l'opération consistant à amener le premier dispositif de communication et le deuxième dispositif de communication à cesser la communication sur la deuxième bande de fréquences et à reprendre la communication sur la première bande de fréquences.

8. Le procédé selon la Revendication 1, après l'écoulement d'une quantité de ressources de communication prédéterminée sur la deuxième bande de fréquences, l'opération consistant à amener le premier dispositif de communication à demander des ressources de communication additionnelles sur la deuxième bande de fréquences.

9. Un système de communication, comprenant :
un premier dispositif de communication (108A) et un deuxième dispositif de communication (108B) configurés de façon à communiquer au moyen d'une première bande de fréquences,
le premier dispositif de communication étant configuré de façon à communiquer une demande de planification, SR, à un troisième dispositif de communication (102) demandant une affectation de ressources de communication associées à une deuxième bande de fréquences si la communication sur la première bande de fréquences échoue,
le premier dispositif de communication étant configuré de façon à recevoir un octroi de ressources de communication sur la deuxième bande de fréquences où la réception de l'octroi de ressources de communication sur la deuxième bande de fréquences comprend en outre :
la réception à partir du troisième dispositif de communication d'un octroi de ressources de communication sur la deuxième bande de fréquences destiné à l'envoi d'un paquet de données, *P1,* le paquet de données, *P1,* contenant des informations de rapport d'état de mémoire tampon, BSR,
la transmission du paquet de données, *P1,* à un quatrième dispositif de communication (116), et
la réception à partir du quatrième dispositif de communication de l'octroi de ressources de communication sur la deuxième bande de fréquences, et
le premier dispositif de communication et le deuxième dispositif de communication étant configurés de façon à communiquer au moyen de la deuxième bande de fréquences.

10. Le système selon la Revendication 9, où la première bande de fréquences comprend un spectre de communication sans licence possédant un ou plusieurs éléments parmi une ressource de communication de dispositif à dispositif choisie parmi une bande Bluetooth et une bande IEEE 802.11.

11. Le système selon la Revendication 9, où la deuxième bande de fréquences comprend un spectre de communication avec licence possédant un ou plusieurs éléments parmi une ressource de communication LTE et une ressource de communication 5G.

12. Le système selon la Revendication 9, où la réception de l'octroi de ressources de communication sur la deuxième bande de fréquences comprend en outre la réception de l'octroi de ressources de communication sur la deuxième bande de fréquences directement à partir du troisième dispositif de communication.

13. Le système selon la Revendication 9, comprenant en outre une des opérations suivantes :
i) lorsque la première bande de fréquences devient disponible, l'opération consistant à amener le premier dispositif de communication et le deuxième dispositif de communication à cesser la communication sur la deuxième bande de fréquences et à reprendre la communication sur la première bande de fréquences,
ii) après l'écoulement d'une quantité de ressources de communication prédéterminée sur la deuxième bande de fréquences, l'opération consistant à amener le premier dispositif de communication et le deuxième dispositif de communication à cesser la communication sur la deuxième bande de fréquences et à reprendre la communication sur la première bande de fréquences, ou
iii) après l'écoulement d'une quantité de ressources de communication prédéterminée sur la deuxième bande de fréquences, l'opération consistant à amener le premier dispositif de communication à demander des ressources de communication additionnelles sur la deuxième bande de fréquences.

14. Le système selon la Revendication 13, option i), comprenant en outre l'envoi d'une demande au troisième dispositif de communication de façon à libérer les ressources de communication sur la deuxième bande de fréquences.

15. Un support lisible par ordinateur non transitoire conservant en mémoire du code exécutable par ordinateur destiné à une communication, le code exécutable par un processeur pour la commande d'un procédé comprenant :
une communication entre un premier dispositif de communication (108A) et un deuxième dispositif de communication (108B) au moyen d'une première bande de fréquences,
si la communication sur la première bande de fréquences échoue, la communication d'une demande de planification, SR, à partir du premier dispositif de communication à un troisième dispositif de communication (102) demandant une affectation de ressources de communication associées à une deuxième bande de fréquences,
la réception d'un octroi de ressources de communication sur la deuxième bande de fréquences où la réception de l'octroi de ressources sur la deuxième bande de fréquences comprend en outre :
la réception à partir du troisième dispositif de communication d'un octroi de ressources de communication sur la deuxième bande de fréquences destiné à l'envoi d'un paquet de données, *P1,* le paquet de données, *P1,* contenant des informations de rapport d'état de mémoire tampon, BSR,
la transmission du paquet de données, *P1,* à un quatrième dispositif de communication (116), et
la réception à partir du quatrième dispositif de communication de l'octroi de ressources sur la deuxième bande de fréquences, et
une communication entre le premier dispositif de communication et le deuxième dispositif de communication au moyen de la deuxième bande de fréquences.
